# EUROPEAN PATENT APPLICATION

(11) **EP 4 804 691 A1**
(43) Date of publication of application: **09.09.2026**
(21) Application number: 24884779.0
(22) Date of filing: 30.10.2024
(51) Int. Cl.: H04W 72/232, H04W 72/121

(54) **METHOD AND APPARATUS FOR SENDING DOWNLINK CONTROL INFORMATION (DCI), METHOD AND APPARATUS FOR RECEIVING DCI, AND TERMINAL AND NETWORK SIDE DEVICE**

(30) Priority: 03.11.2023 CN 202311457651
(71) Applicant: Vivo Mobile Communication Co., Ltd., Dongguan, Guangdong 523863 (CN)
(72) Inventor: LIU, Siqi, Dongguan, Guangdong 523863 (CN); JI, Zichao, Dongguan, Guangdong 523863 (CN)
(74) Representative: Shieldmark
(86) International application number: PCT/CN2024/128346
(87) International publication number: WO 2025/092777

(57) **Abstract**

A method and apparatus for transmitting downlink control information DCI, a method and apparatus for receiving DCI, and a terminal and a network-side device, which belong to the technical field of communications. The method for receiving DCI includes: determining target information by a terminal; and receiving target DCI and/or determining feedback information corresponding to the target DCI by the terminal based on the target information, where the target DCI carries dormancy indication information. The target information includes at least one of the following: a resource object corresponding to the target DCI; DAI or DCI counting information; a limit on the number of DCI; a limit on the number of scheduling; and a terminal processing capability. The target DCI includes at least one of the following: first DCI, without indicating or scheduling data, or without indicating or scheduling data on any resource object; second DCI, indicating or scheduling one piece of data, or indicating or scheduling data on one resource object; and third DCI, indicating or scheduling at least two pieces of data, or indicating or scheduling data on at least two resource objects.

## Description

### CROSS-REFERENCE TO RELATED APPLICATIONS

This application claims the priority of Chinese Patent Application No. 202311457651.9 filed on November 3, 2023, which is incorporated herein by reference in its entirety.

### TECHNICAL FIELD

This application belongs to the technical field of communications, and in particular, relates to a method and apparatus for transmitting downlink control information DCI, a method and apparatus for receiving DCI, and a terminal and a network-side device.

### BACKGROUND

In a mobile communication system, a base station can schedule data of multiple cells through downlink control information (Downlink Control Information, DCI), and such DCI may be referred to as multi-carrier scheduling DCI (multi-cell scheduling DCI, mc-DCI). The mc-DCI can schedule data of one cell, and can also schedule data of multiple cells. Currently, feedback information corresponding to the mc-DCI is fixedly placed in a second sub-codebook at a position corresponding to a cell with the smallest identifier, which does not consider an actual scheduling situation of the mc-DCI, and may cause errors in the feedback information of such DCI, thereby affecting communication performance.

### SUMMARY

Embodiments of this application provide a method and apparatus for transmitting downlink control information DCI, a method and apparatus for receiving DCI, and a terminal and a network-side device, which can clarify a processing capability of a terminal for target DCI and how to generate feedback information of the target DCI.

In a first aspect, a method for receiving downlink control information DCI is provided, which is executed by a terminal. The method includes:
determining target information by the terminal; and
receiving target DCI and/or determining feedback information corresponding to the target DCI by the terminal based on the target information, where the target DCI carries dormancy indication information.

The target information includes at least one of the following:
feedback information corresponding to the target DCI;
a resource object corresponding to the target DCI;
downlink assignment index DAI or DCI counting information;
a limit on the number of DCI;
a limit on the number of scheduling; and
a terminal processing capability.

The target DCI includes at least one of the following:
first DCI, without indicating or scheduling data, or without indicating or scheduling data on any resource object;
second DCI, indicating or scheduling one piece of data, or indicating or scheduling data on one resource object; and
third DCI, indicating or scheduling at least two pieces of data, or indicating or scheduling data on at least two resource objects.

In a second aspect, a method for transmitting downlink control information DCI is provided, which is executed by a network-side device. The method includes:
transmitting target DCI by the network-side device, where the target DCI carries dormancy indication information; and
receiving feedback information corresponding to the target DCI from a terminal by the network-side device.

The target DCI includes at least one of the following:
first DCI, without indicating or scheduling data, or without indicating or scheduling data on any resource object;
second DCI, indicating or scheduling one piece of data, or indicating or scheduling data on one resource object; and
third DCI, indicating or scheduling at least two pieces of data, or indicating or scheduling data on at least two resource objects.

In a third aspect, an apparatus for receiving downlink control information DCI is provided, which is applied to a terminal, and includes:
a determination module, configured to determine target information; and
a processing module, configured to receive target DCI and/or determine feedback information corresponding to the target DCI based on the target information, where the target DCI carries dormancy indication information.

The target information includes at least one of the following:
feedback information corresponding to the target DCI;
a resource object corresponding to the target DCI;
downlink assignment index DAI or DCI counting information;
a limit on the number of DCI;
a limit on the number of scheduling; and
a terminal processing capability.

The target DCI includes at least one of the following:
first DCI, without indicating or scheduling data, or without indicating or scheduling data on any resource object;
second DCI, indicating or scheduling one piece of data, or indicating or scheduling data on one resource object; and
third DCI, indicating or scheduling at least two pieces of data, or indicating or scheduling data on at least two resource objects.

In a fourth aspect, an apparatus for transmitting downlink control information DCI is provided, which is applied to a network-side device, and includes:
a transmitting module, configured to transmit target DCI, where the target DCI carries dormancy indication information; and
a receiving module, configured to receive feedback information corresponding to the target DCI from a terminal.

The target DCI includes at least one of the following:
first DCI, without indicating or scheduling data, or without indicating or scheduling data on any resource object;
second DCI, indicating or scheduling one piece of data, or indicating or scheduling data on one resource object; and
third DCI, indicating or scheduling at least two pieces of data, or indicating or scheduling data on at least two resource objects.

In a fifth aspect, a terminal is provided. The terminal includes a processor and a memory. The memory stores a program or instruction runnable on the processor, and the program or instruction, when executed by the processor, implements the steps of the method according to the first aspect.

In a sixth aspect, a terminal is provided. The terminal includes a processor and a communication interface. The processor is configured to determine target information. The communication interface is configured to receive target DCI and/or determine feedback information corresponding to the target DCI based on the target information, where the target DCI carries dormancy indication information.

The target information includes at least one of the following:
feedback information corresponding to the target DCI;
a resource object corresponding to the target DCI;
downlink assignment index DAI or DCI counting information;
a limit on the number of DCI;
a limit on the number of scheduling; and
a terminal processing capability.

The target DCI includes at least one of the following:
first DCI, without indicating or scheduling data, or without indicating or scheduling data on any resource object;
second DCI, indicating or scheduling one piece of data, or indicating or scheduling data on one resource object; and
third DCI, indicating or scheduling at least two pieces of data, or indicating or scheduling data on at least two resource objects.

In a seventh aspect, a network-side device is provided. The network-side device includes a processor and a memory. The memory stores a program or instruction runnable on the processor, and the program or instruction, when executed by the processor, implements the steps of the method according to the second aspect.

In an eighth aspect, a network-side device is provided. The network-side device includes a processor and a communication interface. The communication interface is configured to transmit target DCI, where the target DCI carries dormancy indication information; and receive feedback information corresponding to the target DCI from a terminal.

The target DCI includes at least one of the following:
first DCI, without indicating or scheduling data, or without indicating or scheduling data on any resource object;
second DCI, indicating or scheduling one piece of data, or indicating or scheduling data on one resource object; and
third DCI, indicating or scheduling at least two pieces of data, or indicating or scheduling data on at least two resource objects.

In a ninth aspect, a readable storage medium is provided. The readable storage medium stores a program or instruction, and the program or instruction, when executed by a processor, implements the steps of the method according to the first aspect or implements the steps of the method according to the second aspect.

In a tenth aspect, a wireless communication system is provided, which includes a terminal and a network-side device. The terminal may be configured to execute the steps of the method according to the first aspect, and the network-side device may be configured to execute the steps of the method according to the second aspect.

In an eleventh aspect, a chip is provided. The chip includes a processor and a communication interface. The communication interface is coupled with the processor, and the processor is configured to run a program or instruction to implement the steps of the method according to the first aspect or implement the steps of the method according to the second aspect.

In a twelfth aspect, a computer program/program product is provided. The computer program/program product is stored in a storage medium, and the computer program/program product is executed by at least one processor to implement the steps of the method according to the first aspect or implement the steps of the method according to the second aspect.

In the embodiments of this application, the terminal can determine the target information, and receive the target DCI and/or determine the feedback information corresponding to the target DCI based on the target information. Since the target information is related to a scheduling situation or other restriction situation of the target DCI (such as the limit on the number of DCI, the limit on the number of scheduling, or the terminal capability), the embodiments of this application take these situations into consideration when receiving the target DCI or determining the feedback information of the target DCI, which can ensure correct demodulation of the target DCI or accuracy of the feedback information of the target DCI, thereby improving communication performance.

### BRIEF DESCRIPTION OF THE DRAWINGS

FIG. 1 is a block diagram of a wireless communication system applicable in an embodiment of this application;
FIG. 2 is a flowchart of a method for receiving DCI according to an embodiment of this application;
FIG. 3 is a flowchart of a method for transmitting DCI according to an embodiment of this application;
FIG. 4 is a schematic structural diagram of an apparatus for receiving DCI according to an embodiment of this application;
FIG. 5 is a schematic structural diagram of another apparatus for transmitting DCI according to an embodiment of this application;
FIG. 6 is a schematic structural diagram of a communication device according to an embodiment of this application;
FIG. 7 is a schematic structural diagram of a terminal according to an embodiment of this application; and
FIG. 8 is a schematic structural diagram of a network-side device according to an embodiment of this application.

### DETAILED DESCRIPTION

The technical solutions in the embodiments of this application will be clearly described below with reference to the drawings in the embodiments of this application. Apparently, the described embodiments are merely some rather than all of the embodiments of this application. All other embodiments obtained by those of ordinary skill in the art based on the embodiments of this application still fall within the scope of protection this application.

Terms such as "first" and "second" in this application are used for distinguishing similar objects, instead of describing a specific order or sequence. It is to be understood that terms used in this way are exchangeable in a proper case, so that the embodiments of this application can be implemented in an order different from the order shown or described herein; and the objects distinguished by "first" and "second" are usually of the same class and do not limit the number of the objects; for example, the number of first objects may be one or more. In addition, "or" in this application represents at least one of the connected objects. For example, "A or B" covers three schemes, namely, scheme one: including A but not including B; scheme two: including B but not including A; and scheme three: including both A and B. The character "/" generally represents an "or" relationship between the associated objects.

The term "indicate" in this application may be a direct indication (or explicit indication) or an indirect indication (or implicit indication). Herein, a direct indication may be understood as: a transmitter explicitly informs, in a transmitted indication, a receiver of specific information, an operation to be performed, a request result, or the like; an indirect indication may be understood as: a receiver determines corresponding information according to the indication transmitted by the transmitter, or makes a determination and determines, according to a determination result, an operation to be performed, a request result, or the like.

It is worth pointing out that the technologies described in the embodiments of this application are not limited to the long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application can be usually exchanged in use. The technologies described not only can be applied to the systems and radio technologies mentioned above, but also can be applied to other systems and radio technologies. The following description describes the new radio (New Radio, NR) system for exemplary purposes and uses NR terminology in most of the following description, but these technologies can also be applied to systems in addition to NR systems, such as 6^{th} generation (6^{th} Generation, 6G) communication systems.

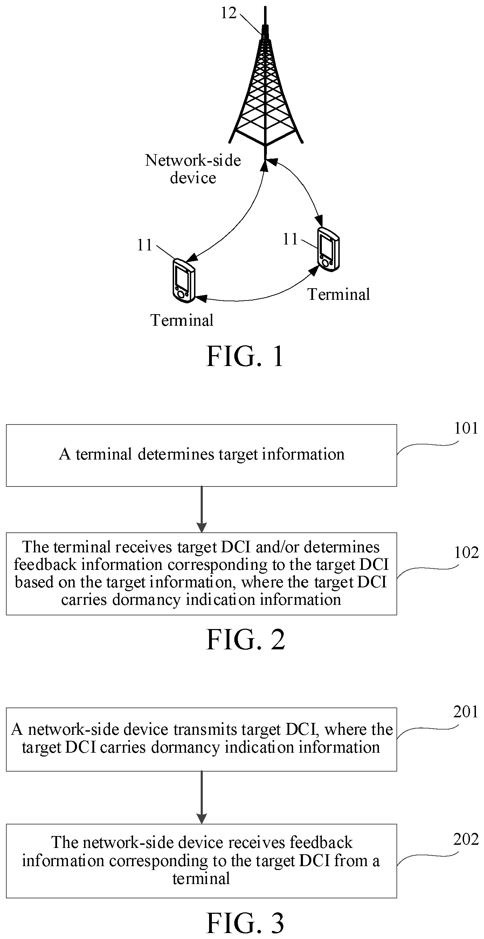

FIG. 1 shows a block diagram of a wireless communication system applicable in an embodiment of this application. The wireless communication system includes a terminal 11 and a network-side device 12. The terminal 11 may be a terminal-side device such as a mobile phone, a tablet personal computer (Tablet Personal Computer), a laptop computer (Laptop Computer), a personal digital assistant (Personal Digital Assistant, PDA), a hand-held computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), a light vehicle (flight vehicle), vehicle user equipment (Vehicle User Equipment, VUE), ship user equipment, pedestrian user equipment (Pedestrian User Equipment, PUE), smart home (home devices with wireless communication functions, such as refrigerators, televisions, washing machines, or furniture), a game console, a personal computer (Personal Computer, PC), an automated teller machine or a self-service machine. The wearable device includes a smart watch, a smart bracelet, a smart headphone, smart glasses, smart jewelry (smart bracelet, smart bracelet, smart ring, smart necklace, smart anklet, smart ankle, and the like), a smart wristband, smart clothing, and the like. The vehicle user equipment may also be referred to as an in-vehicle terminal, an in-vehicle controller, an in-vehicle module, an in-vehicle component, an in-vehicle chip, or an in-vehicle unit. It is to be understood that the specific type of the terminal 11 is not limited in the embodiments of this application. The network-side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), or a wireless fidelity (Wireless Fidelity, WiFi) node. The base station may be referred to as a node B (Node B, NB), an evolved node B (Evolved Node B, eNB), the next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or any other appropriate term in the field, as long as the same technical effect is achieved. The base station is not limited to specific technical vocabulary. It should be noted that in the embodiments of this application, only a base station in an NR system is used as an example for description, and the specific type of the base station is not limited.

The related art supports the following technology: one piece of DCI (multi-cell scheduling DCI, abbreviated as mc-DCI, for example, DCI format 3-0, DCI format 3-1) schedules physical uplink shared channels (Physical Uplink Shared Channel, PUSCH) or physical downlink shared channels (Physical Downlink Shared Channel, PDSCH) of multiple cells.

The following framework is supported:
multiple cells may be divided into multiple cell sets (cell set), for example, a cell set (cell1/2/3/4/5/6/7/8) is divided into two cell sets: a cell set (cell1/2/3/4) and a cell set (cell5/6/7/8);
one cell set may be divided into multiple cell combinations (cell combination), for example, a cell set (cell1/2/3/4) may include cell combinations (cell1/2/3, cell1/2/4, cell1/3); and
one piece of DCI may schedule and/or indicate one cell combination at a time, and specific scheduling and/or indicating methods are divided into two types:

### Method 1: cell indicator based (cell indicator based)

A radio resource control (Radio Resource Control, RRC) message configures a cell combination table for each cell set, each cell combination table has a corresponding index, and the mc-DCI carries a field indicating an index. For example, '01' corresponds to cell1/3, then the mc-DCI indicating '01' indicates cell1/3, and the mc-DCI carries only a frequency domain resource assignment (Frequency Domain Resource Assignment, FDRA) field of cell1/3.

### Method 2: frequency domain resource assignment based (FDRA based)

In the above example, the mc-DCI carries FDRA fields of cell1/2/3/4, and if an FDRA field indicates an invalid value, it indicates that the cell is not scheduled.

Each cell set has a reference cell (reference cell), and the number of blind detections and a DCI size (size) of the mc-DCI for the cell set are calculated on the reference cell.

Each reference cell, or each cell set, or each cell has corresponding limit on the number of DCI and/or limit on the number of scheduling.

For example, within a monitoring occasion (monitoring occasion), there are at most N1 pieces of mc-DCI for the reference cell or cell set (which can schedule at least some cells in the cell set).

For example, within a monitoring occasion (monitoring occasion), there are at most N2 pieces of sc-DCI (single-cell scheduling DCI) for a cell in a cell set (which can schedule the cell).

When performing downlink assignment index (Downlink Assignment Index, DAI) counting, if certain cell combination is scheduled, DAI counting is performed for a cell with the smallest cell identifier (ID) in the cell combination (for example, DAI+1), or DAI counting is performed based on the cell with the smallest cell ID in the cell combination to generate a hybrid automatic repeat request acknowledgement (Hybrid Automatic Repeat Request Acknowledgement, HARQ-ACK) bit. Here, it can be considered that the DAI counting is associated with the DAI counting performed for the cell with the smallest cell ID in the cell combination.

When generating the number of HARQ-ACK bits, a cell set dimension is traversed, and each cell in the cell set is traversed, so that HARQ-ACK bits corresponding to each cell are concatenated together to generate the HARQ-ACK bit. HARQ-ACK bit information corresponding to a cell combination may be placed at a bit position corresponding to a cell with the smallest cell ID in the cell combination. For a cell that has not been scheduled, a corresponding negative acknowledgement (Negative Acknowledgement, NACK) may be generated.

The mc-DCI may carry dormancy (dormancy) indication information, and may carry an explicit dormancy indication (dormancy indication) field, or use a field such as a modulation and coding scheme (Modulation and Coding Scheme, MCS) or a hybrid automatic repeat request (Hybrid Automatic Repeat Request, HARQ) process (process) corresponding to certain cell to indicate the dormancy indication information.

In the related art, if one piece of mc-DCI schedules data of O cells (O>=2), feedback information corresponding to the mc-DCI is placed in a second sub-codebook, and a position of HARQ-ACK feedback information thereof corresponds to a cell with the smallest ID among the O cells. Such mc-DCI may be counted in a limit on the number of DCI of the scheduled cell or the corresponding reference cell.

However, one piece of mc-DCI can not only indicate and/or schedule multiple cells, but also indicate dormancy indication information, and although the mc-DCI indicates and/or schedules certain cells, resource allocation information (for example, FDRA) of these cells is invalid, so there is no actual data. Therefore, how to determine which cell such mc-DCI belongs to, how to perform blind detection, which limit on the number of DCI corresponds to, a capability of a terminal to process such mc-DCI, and how to generate corresponding feedback information are problems that need to be solved.

The following describes the method and apparatus for transmitting downlink control information DCI, the method and apparatus for receiving DCI, and the terminal and the network-side device according to the embodiments of this application in detail with reference to the accompanying drawings and through some embodiments and application scenarios thereof.

Referring to FIG. 2, FIG. 2 is a flowchart of a method for receiving DCI according to an embodiment of this application, where the method is executed by a terminal. As shown in FIG. 2, the method includes the following steps:
Step 101: a terminal determines target information.
Step 102: the terminal receives target DCI and/or determines feedback information corresponding to the target DCI based on the target information, where the target DCI carries dormancy indication information.

The target information includes at least one of the following:
feedback information corresponding to the target DCI;
a resource object corresponding to the target DCI;
downlink assignment index DAI or DCI counting information;
a limit on the number of DCI;
a limit on the number of scheduling; and
a terminal processing capability, such as a DCI processing capability of the terminal.

The target DCI includes at least one of the following:
first DCI, without indicating or scheduling data, or without indicating or scheduling data on any resource object, or a specific field of all indicated and/or scheduled resource objects being invalid or all being specific values, for example, FDRA fields all being 0, or FDRA fields all being 1;
second DCI, indicating or scheduling one piece of data, or indicating or scheduling data on one resource object, or a specific field of one resource object among all indicated and/or scheduled resource objects being valid or not being a specific value, for example, FDRA fields not all being 0, or FDRA fields not all being 1; or a specific field of resource objects other than certain resource object among all the indicated and/or scheduled resource objects being invalid or being a specific value, for example, FDRA fields all being 0, or FDRA fields all being 1; and
third DCI, indicating or scheduling at least two pieces of data, or indicating or scheduling data on at least two resource objects, or a specific field of at least two resource objects among all indicated and/or scheduled resource objects being valid or not being a specific value, for example, FDRA fields not all being 0, or FDRA fields not all being 1; or a specific field of resource objects other than at least two resource objects among all the indicated and/or scheduled resource objects being invalid or being a specific value, for example, FDRA fields all being 0, or FDRA fields all being 1.

In the embodiments of this application, the terminal can determine the target information, and receive the target DCI and/or determine the feedback information corresponding to the target DCI based on the target information, which can clarify a processing capability of the terminal for the target DCI carrying the dormancy indication information and how to generate the feedback information of such type of target DCI.

In the embodiments of this application, the first DCI may be mc-DCI that does not indicate or schedule data of any cell (PDSCH) and carries dormancy, for example, DCI format 1-3 or DCI format 0-3; the second DCI may be mc-DCI that indicates or schedules data of one cell (PDSCH) and carries dormancy; and the third DCI may be mc-DCI that indicates or schedules data of at least two cells (PDSCH) and carries dormancy.

In some embodiments, the resource object includes at least one of the following:
a cell, a carrier, a frequency resource, a resource set, a subchannel, a resource pool, a bandwidth part, a resource block set, and a resource element set.

In some embodiments, the target information further includes a position and/or an order of the feedback information corresponding to the target DCI, and the order of the feedback information corresponding to the target DCI may be specifically a position of the feedback information in a codebook and/or a bit string.

In this embodiment, the terminal can determine the position and/or the order of the feedback information corresponding to the target DCI, and transmit the feedback information to the network-side device based on the position and/or the order of the feedback information corresponding to the target DCI.

In some embodiments, the feedback information corresponding to the first DCI and/or the second DCI is located in a first specific sub-codebook. The sub-codebook may be feedback information, a feedback information string, a feedback information bitmap, or the like, and the first specific sub-codebook corresponds to at least one of the following:
a semi-persistent scheduling (Semi-Persistent Scheduling, SPS) physical downlink shared channel PDSCH;
a transmission configuration indication (Transmission Configuration Indication, TCI) update;
specific downlink control information, such as sc-DCI, where sc-DCI is a DCI format for scheduling one cell, for example, DCI format 1-0, DCI format 1-1, DCI format 1-2, or the like;
a resource object or data scheduled by specific downlink control information;
DCI that has corresponding feedback information but does not indicate or schedule data;
DCI that has corresponding feedback information but does not indicate or schedule any resource object;
DCI that has corresponding feedback information but does not indicate or schedule data on any resource object;
DCI that indicates or schedules one piece of data;
DCI that indicates or schedules one resource object; and
DCI that indicates or schedules data on one resource object.

In this embodiment, the terminal can determine the position of the feedback information corresponding to the target DCI, and transmit the feedback information to the network-side device based on the position of the feedback information corresponding to the target DCI.

In some embodiments, the feedback information corresponding to the target DCI is located in a second specific sub-codebook. The sub-codebook may be feedback information, a feedback information string, or a feedback information bitmap, or the like, and the second specific sub-codebook is a sub-codebook corresponding to at least one of the following:
DCI that indicates or schedules at least two resource objects, optionally, the DCI is mc-DCI;
DCI that indicates or schedules at least two pieces of data, optionally, the DCI is mc-DCI; and
DCI that indicates or schedules data on at least two resource objects, optionally, the DCI is mc-DCI.

In this embodiment, the terminal can determine the position of the feedback information corresponding to the target DCI, and transmit the feedback information to the network-side device based on the position of the feedback information corresponding to the target DCI.

In some embodiments, in a case that the target DCI includes the first DCI and/or the second DCI, the DAI or DCI counting information is determined according to the target DCI and a first counting object, and the first counting object includes at least one of the following:
a counting object that indicates or schedules an SPS PDSCH;
a counting object corresponding to a TCI update;
a counting object corresponding to specific downlink control information;
a counting object corresponding to a resource object or data scheduled by specific downlink control information;
a counting object that has corresponding feedback information but does not indicate or schedule data on any resource object;
a counting object that has corresponding feedback information but does not indicate or schedule any resource object;
a counting object that indicates or schedules data on one resource object;
a counting object that indicates or schedules one resource object; and
a counting object that indicates or schedules one piece of data.

The counting object includes at least one of the following: PDCCH, DCI, time unit, pairing of DCI and time unit, pairing of PDCCH and time unit, and pairing of resource object and time unit. The resource object may be a cell, and the time unit may be a monitoring occasion, a slot, a symbol, or the like.

The DAI or DCI counting information is determined by the target DCI and the first counting object. When performing downlink assignment index counting, counting is performed according to the number of pieces of target DCI and the number of first counting objects, or, when performing DCI counting, counting is performed according to the number of pieces of target DCI and the number of first counting objects.

In this embodiment, the terminal can clarify how to perform DAI or DCI counting based on the target DCI.

In some embodiments, the DAI or DCI counting information is determined according to the first counting object, and the first counting object includes at least one of the following:
a counting object that indicates or schedules an SPS PDSCH;
a counting object corresponding to a TCI update;
a counting object corresponding to specific downlink control information;
a counting object corresponding to a resource object or data scheduled by specific downlink control information;
a counting object that has corresponding feedback information but does not indicate or schedule data on any resource object;
a counting object that has corresponding feedback information but does not indicate or schedule any resource object;
a counting object that indicates or schedules data on one resource object;
a counting object that indicates or schedules one resource object; and
a counting object that indicates or schedules one piece of data.

The counting object includes at least one of the following: PDCCH, DCI, time unit, pairing of DCI and time unit, pairing of PDCCH and time unit, and pairing of resource object and time unit. The resource object may be a cell, and the time unit may be a monitoring occasion, a slot, a symbol, or the like.

In some embodiments, the DAI or DCI counting information is determined according to the target DCI and a second counting object, and the second counting object includes at least one of the following:
a counting object that indicates or schedules at least two resource objects;
a counting object that indicates or schedules data on at least two resource objects; and
a counting object that indicates or schedules at least two pieces of data.

The counting object includes at least one of the following: PDCCH, DCI, time unit, pairing of DCI and time unit, pairing of PDCCH and time unit, and pairing of resource object and time unit. The resource object may be a cell.

The DAI or DCI counting information is determined according to the target DCI and the second counting object. When performing downlink assignment index counting, counting is performed according to the number of pieces of target DCI and the number of second counting objects, or, when performing DCI counting, counting is performed according to the number of pieces of target DCI and the number of second counting objects.

In this embodiment, the terminal can clarify how to perform DAI or DCI counting based on the target DCI.

In some embodiments, the DAI or DCI counting information is determined according to the second counting object, and the second counting object includes at least one of the following:
a counting object that indicates or schedules at least two resource objects;
a counting object that indicates or schedules data on at least two resource objects; and
a counting object that indicates or schedules at least two pieces of data.

The counting object includes at least one of the following: PDCCH, DCI, time unit, pairing of DCI and time unit, pairing of PDCCH and time unit, and pairing of resource object and time unit. The resource object may be a cell, and the time unit may be a monitoring occasion, a slot, a symbol, or the like.

In some embodiments, the pairing of resource object and time unit is pairing of the first resource object and the time unit, and the first resource object includes at least one of the following:
a specific resource object, such as a specific cell;
a resource object with the smallest or largest identifier, such as a cell with the smallest or largest identifier;
a resource object with the smallest or largest index, such as a cell with the smallest or largest index;
a resource object corresponding to a specific identifier, such as a cell with a specific identifier;
a resource object with the smallest or largest sub-carrier spacing;
a resource object corresponding to a specific sub-carrier spacing;
a resource object with the largest number of blind detections or strongest blind detection capability;
a resource object with the largest limit on the number of pieces of DCI or maximum number of instances of scheduling;
a resource object with the smallest number of blind detections or weakest blind detection capability;
a resource object with the smallest limit on the number of pieces of DCI or minimum number of instances of scheduling;
a resource object corresponding to the dormancy indication information, enhanced Type-3 codebook related information (such as pdsch-HARQ-ACK-EnhType3Index), or hybrid automatic repeat request acknowledgement HARQ-ACK retransmission related information (such as related information *l* for determining a time domain position of HARQ-ACK retransmission); and
specifically, for example, an MCS and/or other information field corresponding to a cell 1 is used for indicating pdsch-HARQ-ACK-EnhType3Index, or indicating related information *l* for determining a time domain position of HARQ-ACK retransmission, then the first resource object is the cell 1.
a resource object corresponding to DCI that has related HARQ-ACK but has no corresponding data.

In some embodiments, the target DCI corresponds to at least one of the following resource objects:
a specific resource object, such as a specific cell;
a reference resource object, such as a reference cell;
a scheduling resource object, such as a scheduling cell;
a scheduled resource object, such as a scheduled cell; and
a resource object in which the target DCI is located, such as a cell in which the target DCI is located.

In this embodiment, the terminal can determine the resource object corresponding to the target DCI.

In some embodiments, the target information is related to the resource object corresponding to the target DCI. For example, if the target information is feedback information, the feedback information is feedback information corresponding to the resource object; if the target information is restriction information, the restriction information is restriction information corresponding to the resource object; and if the target information is capability information, the capability information is capability information corresponding to the resource object.

In some embodiments, the resource object corresponding to the first DCI is at least one of the following:
a primary resource object, such as a primary cell;
an anchor resource object, which is an object that can be accessed, such as a resource object that includes a cell defining synchronization signal block (Synchronization Signal, SSB) and a system information block (system information block, SIB);
a resource object including a specific signal and/or channel, where the specific signal and/or channel may be at least one of: a synchronization signal, an SIB, a master information block (MasterInformationBlock, MIB), or the like;
a resource object that satisfies a first preset condition among indicated and/or scheduled resource objects;
a resource object in which data that satisfies a second preset condition among indicated and/or scheduled data is located;
a resource object of which at least part of a corresponding information field is used for indicating the dormancy indication information; and
a resource object that satisfies a third preset condition among resource objects scheduling no data or having a frequency domain resource assignment field FDRA being invalid information or the FDRA being a specific value.

In this embodiment, the terminal can determine the resource object corresponding to the first DCI.

The first preset condition, the second preset condition, and the third preset condition may be configured by the network-side device, or defined by a protocol, or predefined by a protocol. For example, it may be a cell with the smallest cell identifier, or a cell with the smallest cell identifier among cells that schedules no data or have the FDRA being invalid information or the FDRA being a specific value.

In some embodiments, the target information is related to a resource object corresponding to the second DCI, and the resource object corresponding to the second DCI is at least one of the following:
a primary resource object, such as a primary cell;
an anchor resource object, which is an object that can be accessed, such as a resource object that includes a cell defining synchronization signal block (Synchronization Signal, SSB) and a system information block (system information block, SIB);
a resource object including a specific signal and/or channel, where the specific signal and/or channel may be at least one of: a synchronization signal, an SIB, a master information block (MasterInformationBlock, MIB), or the like;
a resource object with data being scheduled;
a resource object that satisfies a fourth preset condition among indicated and/or scheduled resource objects;
a resource object in which data that satisfies a fifth preset condition among indicated and/or scheduled data is located;
a resource object of which at least part of a corresponding information field is used for indicating the dormancy indication information; and
a resource object that satisfies a sixth preset condition among resource objects scheduling no data or having a frequency domain resource assignment field FDRA being invalid information or the FDRA being a specific value.

The fourth preset condition, the fifth preset condition, and the sixth preset condition may be configured by the network-side device, or defined by a protocol, or predefined by a protocol. For example, it may be a cell with the smallest cell identifier, or a cell with the smallest cell identifier among cells that schedules no data or have the FDRA being invalid information or the FDRA being a specific value.

In this embodiment, the terminal can determine the resource object corresponding to the second DCI.

In some embodiments, the target information is related to a resource object corresponding to the third DCI, and the resource object corresponding to the third DCI is at least one of the following:
a primary resource object, such as a primary cell;
an anchor resource object, which is an object that can be accessed, such as a resource object that includes a cell defining synchronization signal block (Synchronization Signal, SSB) and a system information block (system information block, SIB);
a resource object including a specific signal and/or channel, where the specific signal and/or channel may be at least one of: a synchronization signal, an SIB, a master information block (MasterInformationBlock, MIB), or the like;
a resource object that satisfies a seventh preset condition among resource objects with data being scheduled;
a resource object in which data that satisfies an eighth preset condition among indicated and/or scheduled data is located;
a resource object that satisfies a ninth preset condition among indicated and/or scheduled resource objects;
a resource object of which at least part of a corresponding information field is used for indicating the dormancy indication information; and
a resource object that satisfies a tenth preset condition among resource objects scheduling no data or having a frequency domain resource assignment field FDRA being invalid information or the FDRA being a specific value.

The seventh preset condition, the eighth preset condition, the ninth preset condition, and the tenth preset condition may be configured by the network-side device, or defined by a protocol, or predefined by a protocol. For example, it may be a cell with the smallest cell identifier, or a cell with the smallest cell identifier among cells that schedules no data or have the FDRA being invalid information or the FDRA being a specific value.

In this embodiment, the terminal can determine the resource object corresponding to the third DCI.

In some embodiments, a position of the feedback information corresponding to the first DCI and/or the second DCI corresponds to a first target resource object corresponding to the first DCI and/or the second DCI, and the first target resource object includes at least one of the following: a primary resource object (such as a primary cell), an anchor resource object, a resource object including a specific signal and/or channel, a scheduling resource object, a scheduled resource object, a resource object in which the target DCI is located, a specific resource object (such as a specific cell), a reference resource object (such as a reference cell), and a resource object set (such as a cell set).

In this embodiment, the terminal can determine the position of the feedback information corresponding to the first DCI and/or the second DCI, and transmit the feedback information to the network-side device based on the position.

In some embodiments, the first DCI is DCI for the first target resource object, and the first target resource object includes at least one of the following: a primary resource object (such as a primary cell), an anchor resource object, a resource object including a specific signal and/or channel, a scheduling resource object, a scheduled resource object, a resource object in which the target DCI is located, a specific resource object (such as a specific cell), a reference resource object (such as a reference cell), and a resource object set (such as a cell set).

In some embodiments, in M time units, there exist no more than L pieces of the target DCI or no more than L pieces of mc-DCI; or
in M time units, there exist no more than L pieces of the target DCI or no more than L pieces of single-cell downlink control information sc-DCI that indicates or schedules the first target resource object; or
in M time units, there exist no more than L pieces of mc-DCI or no more than L pieces of sc-DCI that indicates or schedules the first target resource object; or
at least two of the target DCI, mc-DCI, and sc-DCI that indicates or schedules the first target resource object appear in M time units, and the total number of the at least two does not exceed L; or
in M time units, more than L pieces of the target DCI and more than L pieces of mc-DCI do not appear at the same time; or
in M time units, more than L pieces of the target DCI and more than L pieces of sc-DCI that schedules the first target resource object do not appear at the same time; or
in M time units, more than L pieces of mc-DCI and more than L pieces of sc-DCI that schedules the first target resource object do not appear at the same time; or
the terminal does not expect that the total number of at least two of the target DCI, mc-DCI, and sc-DCI that schedules the first target resource object appearing in M time units exceeds L.
M and L are positive integers.

In some embodiments, for the first target resource object,
in M time units, there exist no more than L pieces of the first DCI or no more than L pieces of mc-DCI; or
in M time units, there exist no more than L pieces of the first DCI or no more than L pieces of sc-DCI that indicates or schedules the first target resource object; or
in M time units, there exist no more than L pieces of mc-DCI or no more than L pieces of sc-DCI that indicates or schedules the first target resource object; or
at least two of the first DCI, mc-DCI, and sc-DCI that indicates or schedules the first target resource object appear in M time units, and the total number of the at least two does not exceed L; or
in M time units, more than L pieces of the first DCI and more than L pieces of mc-DCI do not appear at the same time; or
in M time units, more than L pieces of the first DCI and more than L pieces of sc-DCI that schedules the first target resource object do not appear at the same time; or
in M time units, more than L pieces of mc-DCI and more than L pieces of sc-DCI that schedules the first target resource object do not appear at the same time; or
the terminal does not expect that the total number of at least two of the first DCI, mc-DCI, and sc-DCI that schedules the first target resource object appearing in M time units exceeds L.

The first target resource object includes at least one of the following: a primary resource object (such as a primary cell), an anchor resource object, a resource object including a specific signal and/or channel, a scheduling resource object, a scheduled resource object, a resource object in which the target DCI is located, a specific resource object (such as a specific cell), a reference resource object (such as a reference cell), and a resource object set (such as a cell set). M and L are positive integers, and a value of L may be 1.

In this embodiment, for the first target resource object, the first DCI is first DCI that schedules the first target resource object or corresponds to the first target resource object; the mc-DCI is mc-DCI that schedules the first target resource object or corresponds to the first target resource object; and the sc-DCI is sc-DCI that schedules the first target resource object or corresponds to the first target resource object. The mc-DCI may be DCI format 1-3 or 0-3, and is DCI that can indicate and/or schedule one or more resource objects.

In a specific example, it is a piece of DCI that can indicate and/or schedule multiple cells (for example, DCI format 1-3) and the DCI schedules no data and carries dormancy indication. Further optionally, the DCI indicates cells 2/3/4.

Optionally, the DCI may be regarded as a piece of unicast DCI corresponding to a primary cell (Pcell).

Optionally, within N monitoring occasions, or within N slots (N is a positive integer), it is not expected that self-scheduling DCI of the Pcell and the above DCI appear at the same time.

Optionally, within N monitoring occasions, or within N slots (N is a positive integer), at most the self-scheduling DCI of the Pcell, or one piece of the above DCI appears.

In another specific example, it is a piece of DCI that can indicate and/or schedule multiple cells (such as DCI format 1-3), and the DCI carries dormancy indication. Further optionally, the DCI indicates cells 2/3/4 and schedules data of the cell 3.

Optionally, the DCI may be a piece of unicast DCI of the cell 3.

Optionally, feedback information corresponding to the DCI corresponds to the cell 3. Further optionally, a position of the feedback information corresponding to the DCI corresponds to the cell 3.

Optionally, within N monitoring occasions, or within N slots (N is a positive integer), it is not expected that DCI scheduling the cell 3 and the above DCI appear at the same time.

Optionally, within N monitoring occasions, or within N slots (N is a positive integer), at most one piece of DCI scheduling the cell 3, or one piece of the above DCI appears.

Alternatively, the DCI may be regarded as a piece of unicast DCI of the cell 2.

Optionally, feedback information corresponding to the DCI corresponds to the cell 2. Further optionally, a position of the feedback information corresponding to the DCI corresponds to the cell 2.

Optionally, within N monitoring occasions, or within N slots (N is a positive integer), it is not expected that DCI scheduling the cell 2 and the above DCI appear at the same time.

Optionally, within N monitoring occasions, or within N slots (N is a positive integer), at most one piece of DCI scheduling the cell 2, or one piece of the above DCI appears.

In some embodiments, the second DCI is DCI for a second target resource object, and the second target resource object includes at least one of the following: a primary resource object (such as a primary cell), an anchor resource object, a resource object including a specific signal and/or channel, a scheduling resource object, a scheduled resource object, a resource object in which the target DCI is located, a specific resource object (such as a specific cell), a reference resource object (such as a reference cell), and a resource object set (such as a cell set).

In some embodiments, for the second target resource object,
in M time units, there exist no more than L pieces of the second DCI or no more than L pieces of mc-DCI; or
in M time units, there exist no more than L pieces of the second DCI or no more than L pieces of sc-DCI that indicates or schedules the second target resource object; or
in M time units, there exist no more than L pieces of mc-DCI or no more than L pieces of sc-DCI that indicates or schedules the second target resource object; or
at least two of the second DCI, mc-DCI, and sc-DCI that indicates or schedules the second target resource object appear in M time units, and the total number of the at least two does not exceed L; or
in M time units, more than L pieces of the second DCI and more than L pieces of mc-DCI do not appear at the same time; or
in M time units, more than L pieces of the second DCI and more than L pieces of sc-DCI that schedules the second target resource object do not appear at the same time; or
in M time units, more than L pieces of mc-DCI and more than L pieces of sc-DCI that schedules the second target resource object do not appear at the same time; or
the terminal does not expect that the total number of at least two of the second DCI, mc-DCI, and sc-DCI that schedules the second target resource object appearing in M time units exceeds L.

The second target resource object includes at least one of the following: a primary resource object (such as a primary cell), an anchor resource object, a resource object including a specific signal and/or channel, a scheduling resource object, a scheduled resource object, a resource object in which the target DCI is located, a specific resource object (such as a specific cell), a reference resource object (such as a reference cell), and a resource object set (such as a cell set). M and L are positive integers, and a value of L may be 1.

In some embodiments, the number of pieces of DCI in Q time units does not exceed P1; and/or
the number of instances of scheduling in Q time units does not exceed P2; and/or
the terminal processing capability in Q time units does not exceed P3.
Q is a positive integer, P1, P2, and P3 are positive integers, and optionally, P is 1.

In some embodiments, the feedback information corresponding to the target DCI is transmitted after a first time period following the target DCI, or the feedback information corresponding to the target DCI is transmitted after a second time period following a last piece of data, the first time period is determined based on a target sub-carrier spacing (Sub-carrier spacing, SCS), and the target SCS is the smallest or largest SCS of an SCS of the DCI and an SCS used for transmitting the feedback information.

If the target DCI is the first DCI, the feedback information is transmitted after a first time period following the target DCI, and the first time period is determined based on the target SCS. The target SCS is the smaller SCS of an SCS of the first DCI and an SCS used for transmitting the feedback information.

In this embodiment, the terminal is expected to provide HARQ-ACK information in response to a detection of a DCI format 1_3 indicating secondary cell (SCell) dormancy after *N* symbols from the last symbol of a PDCCH providing the DCI format 1_3. If *Type2Enabled* of *PDSCH-ServingCellConfig* is set to *enable* for the serving cell with the PDCCH providing the DCI format 1_1, *N* = 7 for *µ* = 0, *N* = 7.5 for *µ* = 1, and *N* = 15 for *µ* = 2 ; otherwise, N = 14 for *µ* = 0, N = 16 for *µ* = 1, N = 27 for *µ* = 2, *N* = 31 for *µ* = *3, N = 124* for *µ* = 5, and = 248 for *µ* = 6, where *µ* is the smallest SCS configuration between the SCS configuration of the PDCCH providing the DCI format 1_3 and the SCS configuration of a PUCCH with the HARQ-ACK information in response to the detection of the DCI format 1_3.

In some embodiments, the feedback information corresponding to the target DCI includes at least one of the following:
a positive acknowledgement ACK;
a negative acknowledgement NACK; and
hybrid automatic repeat request acknowledgement HARQ-ACK information corresponding to data (such as PDSCH).

Alternatively, the feedback information corresponding to the target DCI includes at least one of the following:
an AND result of the HARQ-ACK information corresponding to the data (such as PDSCH) and the NACK; and
an AND result of the HARQ-ACK information corresponding to the data (such as PDSCH) and the ACK.

In some embodiments, the feedback information of the first DCI is the ACK; and/or
the feedback information of the second DCI satisfies any one of the following: including the ACK, including the HARQ-ACK information corresponding to the data (such as PDSCH), including the ACK and the HARQ-ACK information corresponding to the data (such as PDSCH), or including the AND result of the ACK and the HARQ-ACK information corresponding to the data (such as PDSCH); and/or
the feedback information of the third DCI satisfies any one of the following: at least including the HARQ-ACK information corresponding to the data (such as PDSCH), including the AND result of the NACK and the HARQ-ACK information corresponding to the data (such as PDSCH), or including the AND result of the ACK and the HARQ-ACK information corresponding to the data (such as PDSCH).

Optionally, the feedback information of the target DCI (such as the first DCI) at least includes the ACK.

Optionally, the feedback information of the target DCI (such as the second DCI or the third DCI) at least includes the HARQ-ACK information corresponding to the PDSCH.

If certain cell supports 2TB transmission (for example, configured with maxNrofCodeWordsScheduledByDCI=2) and spatial bundling is not performed (for example, not configured with harq-ACK-SpatialBundlingPUCCH), at least one of the following is included:
for the first DCI, the feedback information corresponding to a first TB is the ACK, and the feedback information corresponding to a second TB is the NACK; and
for the second DCI or the third DCI, the feedback information corresponding to a first TB is the HARQ-ACK information corresponding to the PDSCH, and the feedback information corresponding to a second TB is the NACK.

If certain cell supports 2TB transmission (for example, configured with maxNrofCodeWordsScheduledByDCI=2) and spatial bundling is performed (for example, configured with harq-ACK-SpatialBundlingPUCCH), at least one of the following is included:
for the first DCI, the feedback information corresponding to a first TB is the ACK, and the feedback information corresponding to a second TB is the ACK; and
for the second DCI or the third DCI, the feedback information corresponding to a first TB is the HARQ-ACK information corresponding to the PDSCH, and the feedback information corresponding to a second TB is the ACK.

It is worth noting that the mc-DCI described in this embodiment is multi-cell scheduling DCI or multi-carrier scheduling DCI, and is DCI that can schedule one or more resource objects, or DCI that schedules one or more pieces of data, for example, DCI format 1-3 and/or 0-3.

The sc-DCI is single-cell scheduling DCI or single-carrier scheduling DCI, and is DCI that can schedule one resource object, for example, DCI format 0-0 and/or 0-1 and/or 0-2 and/or 0 and/or 0-4 and/or 1-0 and/or 1-1 and/or 1-2 and/or 1-4. Optionally, the sc-DCI in this embodiment may also be interpreted as group common DCI indicating power control or resource format or preemption or sounding reference signal (Sounding Reference Signal, SRS) information, or the like, for example, DCI format 2-x, where x>=0.

In some embodiments, the terminal does not expect or does not support the first DCI; and/or
the terminal does not expect that all resource objects indicated or scheduled by the target DCI have no corresponding data; and/or
the terminal does not expect that FDRA fields indicated or scheduled by the target DCI are all specific values or invalid values.

In a specific example, the terminal does not expect that FDRA fields of all cells indicated by DCI format 0_3 are set to 0 for resource allocation type 0, or are set to 1 for resource allocation category 1, or are set to 0 or 1 for dynamic switching resource allocation category, or are set to 0 for resource allocation category 2 with µ=1, or are set to 1 for resource allocation type 2 with µ=0.

The terminal does not expect that FDRA fields of all cells indicated by DCI format 1_3 are set to 0 for resource allocation type 0, or are set to 1 for resource allocation category 1, or are set to 0 or 1 for dynamic switching resource allocation category.

Referring to FIG. 3, FIG. 3 is a flowchart of a method for transmitting DCI according to an embodiment of this application. The method is executed by a network-side device. As shown in FIG. 3, the method includes the following steps:
Step 201: a network-side device transmits target DCI, where the target DCI carries dormancy indication information.
Step 202: the network-side device receives feedback information corresponding to the target DCI from a terminal.

The target DCI includes at least one of the following:
first DCI, without indicating or scheduling data, or without indicating or scheduling data on any resource object;
second DCI, indicating or scheduling one piece of data, or indicating or scheduling data on one resource object; and
third DCI, indicating or scheduling at least two pieces of data, or indicating or scheduling data on at least two resource objects.

In some embodiments, the resource object includes at least one of the following:
a cell, a carrier, a frequency resource, a resource set, a subchannel, a resource pool, a bandwidth part, a resource block set, and a resource element set.

In some embodiments, feedback information corresponding to the first DCI and/or the second DCI is located in a first specific sub-codebook, and the first specific sub-codebook corresponds to at least one of the following:
a semi-persistent scheduling SPS physical downlink shared channel PDSCH;
a transmission configuration indication TCI update;
specific downlink control information;
a resource object or data scheduled by specific downlink control information;
DCI that has corresponding feedback information but does not indicate or schedule data;
DCI that has corresponding feedback information but does not indicate or schedule any resource object;
DCI that has corresponding feedback information but does not indicate or schedule data on any resource object;
DCI that indicates or schedules one piece of data;
DCI that indicates or schedules one resource object; and
DCI that indicates or schedules data on one resource object.

In some embodiments, the feedback information corresponding to the target DCI is located in a second specific sub-codebook, and the second specific sub-codebook is a sub-codebook corresponding to at least one of the following:
DCI that indicates or schedules at least two resource objects;
DCI that indicates or schedules at least two pieces of data; and
DCI that indicates or schedules data on at least two resource objects.

In some embodiments, in a case that the target DCI includes the first DCI and/or the second DCI, the DAI or DCI counting information is determined according to the target DCI and a first counting object, and the first counting object includes at least one of the following:
a counting object that indicates or schedules an SPS PDSCH;
a counting object corresponding to a TCI update;
a counting object corresponding to specific downlink control information;
a counting object corresponding to a resource object or data scheduled by specific downlink control information;
a counting object that has corresponding feedback information but does not indicate or schedule data on any resource object;
a counting object that has corresponding feedback information but does not indicate or schedule any resource object;
a counting object that indicates or schedules data on one resource object;
a counting object that indicates or schedules one resource object; and
a counting object that indicates or schedules one piece of data.

The counting object includes at least one of the following: PDCCH, DCI, time unit, pairing of DCI and time unit, pairing of PDCCH and time unit, and pairing of resource object and time unit.

In some embodiments, the DAI or DCI counting information is determined according to the first counting object, and the first counting object includes at least one of the following:
a counting object that indicates or schedules an SPS PDSCH;
a counting object corresponding to a TCI update;
a counting object corresponding to specific downlink control information;
a counting object corresponding to a resource object or data scheduled by specific downlink control information;
a counting object that has corresponding feedback information but does not indicate or schedule data on any resource object;
a counting object that has corresponding feedback information but does not indicate or schedule any resource object;
a counting object that indicates or schedules data on one resource object;
a counting object that indicates or schedules one resource object; and
a counting object that indicates or schedules one piece of data.

The counting object includes at least one of the following: PDCCH, DCI, time unit, pairing of DCI and time unit, pairing of PDCCH and time unit, and pairing of resource object and time unit.

In some embodiments, the DAI or DCI counting information is determined according to the target DCI and a second counting object, and the second counting object includes at least one of the following:
a counting object that indicates or schedules at least two resource objects;
a counting object that indicates or schedules data on at least two resource objects; and
a counting object that indicates or schedules at least two pieces of data.

The counting object includes at least one of the following: PDCCH, DCI, time unit, pairing of DCI and time unit, pairing of PDCCH and time unit, and pairing of resource object and time unit.

In some embodiments, the DAI or DCI counting information is determined according to the second counting object, and the second counting object includes at least one of the following:
a counting object that indicates or schedules at least two resource objects;
a counting object that indicates or schedules data on at least two resource objects; and
a counting object that indicates or schedules at least two pieces of data.

The counting object includes at least one of the following: PDCCH, DCI, time unit, pairing of DCI and time unit, pairing of PDCCH and time unit, and pairing of resource object and time unit.

In some embodiments, the pairing of resource object and time unit is pairing of the first resource object and the time unit, and the first resource object includes at least one of the following: a specific resource object;
a resource object with the smallest or largest identifier;
a resource object with the smallest or largest index;
a resource object corresponding to a specific identifier;
a resource object with the smallest or largest sub-carrier spacing;
a resource object corresponding to a specific sub-carrier spacing;
a resource object with the largest number of blind detections or strongest blind detection capability;
a resource object with the largest limit on the number of pieces of DCI or maximum number of instances of scheduling;
a resource object with the smallest number of blind detections or weakest blind detection capability;
a resource object with the smallest limit on the number of pieces of DCI or minimum number of instances of scheduling;
a resource object corresponding to the dormancy indication information, enhanced Type-3 codebook related information, or hybrid automatic repeat request acknowledgement HARQ-ACK retransmission related information; and
a resource object corresponding to DCI that has related HARQ-ACK but has no corresponding data.

In some embodiments, the target DCI corresponds to at least one of the following resource objects:
a specific resource object;
a reference resource object;
a scheduling resource object;
a scheduled resource object; and
a resource object in which the target DCI is located.

In some embodiments, the resource object corresponding to the first DCI is at least one of the following:
a primary resource object;
an anchor resource object;
a resource object including a specific signal and/or channel;
a resource object that satisfies a first preset condition among indicated and/or scheduled resource objects;
a resource object in which data that satisfies a second preset condition among indicated and/or scheduled data is located;
a resource object of which at least part of a corresponding information field is used for indicating the dormancy indication information; and
a resource object that satisfies a third preset condition among resource objects scheduling no data or having a frequency domain resource assignment field FDRA being invalid information or the FDRA being a specific value.

In some embodiments, the target information is related to a resource object corresponding to the second DCI, and the resource object corresponding to the second DCI is at least one of the following:
a primary resource object;
an anchor resource object;
a resource object including a specific signal and/or channel;
a resource object with data being scheduled;
a resource object that satisfies a fourth preset condition among indicated and/or scheduled resource objects;
a resource object in which data that satisfies a fifth preset condition among indicated and/or scheduled data is located;
a resource object of which at least part of a corresponding information field is used for indicating the dormancy indication information; and
a resource object that satisfies a sixth preset condition among resource objects scheduling no data or having a frequency domain resource assignment field FDRA being invalid information or the FDRA being a specific value.

In some embodiments, the target information is related to a resource object corresponding to the third DCI, and the resource object corresponding to the third DCI is at least one of the following:
a primary resource object;
an anchor resource object;
a resource object including a specific signal and/or channel;
a resource object that satisfies a seventh preset condition among resource objects with data being scheduled;
a resource object in which data that satisfies an eighth preset condition among indicated and/or scheduled data is located;
a resource object that satisfies a ninth preset condition among indicated and/or scheduled resource objects;
a resource object of which at least part of a corresponding information field is used for indicating the dormancy indication information; and
a resource object that satisfies a tenth preset condition among resource objects scheduling no data or having a frequency domain resource assignment field FDRA being invalid information or the FDRA being a specific value.

In some embodiments, a position of feedback information corresponding to the first DCI and/or the second DCI corresponds to a first target resource object corresponding to the first DCI and/or the second DCI, and the first target resource object includes at least one of the following: a primary resource object, an anchor resource object, a resource object including a specific signal and/or channel, a scheduling resource object, a scheduled resource object, a resource object in which the target DCI is located, a specific resource object, a reference resource object, and a resource object set.

In some embodiments, the first DCI is DCI for a first target resource object, and the first target resource object includes at least one of the following: a primary resource object, an anchor resource object, a resource object including a specific signal and/or channel, a scheduling resource object, a scheduled resource object, a resource object in which the target DCI is located, a specific resource object, a reference resource object, and a resource object set.

In some embodiments, in M time units, there exist no more than L pieces of the target DCI or no more than L pieces of mc-DCI; or
in M time units, there exist no more than L pieces of the target DCI or no more than L pieces of single-cell downlink control information sc-DCI that indicates or schedules the first target resource object; or
in M time units, there exist no more than L pieces of mc-DCI or no more than L pieces of sc-DCI that indicates or schedules the first target resource object; or
at least two of the target DCI, mc-DCI, and sc-DCI that indicates or schedules the first target resource object appear in M time units, and the total number of the at least two does not exceed L; or
in M time units, more than L pieces of the target DCI and more than L pieces of mc-DCI do not appear at the same time; or
in M time units, more than L pieces of the target DCI and more than L pieces of sc-DCI that schedules the first target resource object do not appear at the same time; or
in M time units, more than L pieces of mc-DCI and more than L pieces of sc-DCI that schedules the first target resource object do not appear at the same time; or
the terminal does not expect that the total number of at least two of the target DCI, mc-DCI, and sc-DCI that schedules the first target resource object appearing in M time units exceeds L.

M and L are positive integers.

In some embodiments, for the first target resource object,
in M time units, there exist no more than L pieces of the first DCI or no more than L pieces of mc-DCI; or
in M time units, there exist no more than L pieces of the first DCI or no more than L pieces of sc-DCI that indicates or schedules the first target resource object; or
in M time units, there exist no more than L pieces of mc-DCI or no more than L pieces of sc-DCI that indicates or schedules the first target resource object; or
at least two of the first DCI, mc-DCI, and sc-DCI that indicates or schedules the first target resource object appear in M time units, and the total number of the at least two does not exceed L; or
in M time units, more than L pieces of the first DCI and more than L pieces of mc-DCI do not appear at the same time; or
in M time units, more than L pieces of the first DCI and more than L pieces of sc-DCI that schedules the first target resource object do not appear at the same time; or
in M time units, more than L pieces of mc-DCI and more than L pieces of sc-DCI that schedules the first target resource object do not appear at the same time.

The first target resource object includes at least one of the following: a primary resource object, an anchor resource object, a resource object including a specific signal and/or channel, a scheduling resource object, a scheduled resource object, a resource object in which the target DCI is located, a specific resource object, a reference resource object, and a resource object set. M and L are positive integers.

In some embodiments, the second DCI is DCI for a second target resource object, and the second target resource object includes at least one of the following: a primary resource object, an anchor resource object, a resource object including a specific signal and/or channel, a scheduling resource object, a scheduled resource object, a resource object in which the target DCI is located, a specific resource object, a reference resource object, and a resource object set.

In some embodiments, for the second target resource object,
in M time units, there exist no more than L pieces of the second DCI or no more than L pieces of mc-DCI; or
in M time units, there exist no more than L pieces of the second DCI or no more than L pieces of sc-DCI that indicates or schedules the second target resource object; or
in M time units, there exist no more than L pieces of mc-DCI or no more than L pieces of sc-DCI that indicates or schedules the second target resource object; or
at least two of the second DCI, mc-DCI, and sc-DCI that indicates or schedules the second target resource object appear in M time units, and the total number of the at least two does not exceed L; or
in M time units, more than L pieces of the second DCI and more than L pieces of mc-DCI do not appear at the same time; or
in M time units, more than L pieces of the second DCI and more than L pieces of sc-DCI that schedules the second target resource object do not appear at the same time; or
in M time units, more than L pieces of mc-DCI and more than L pieces of sc-DCI that schedules the second target resource object do not appear at the same time.

The second target resource object includes at least one of the following: a primary resource object, an anchor resource object, a resource object including a specific signal and/or channel, a scheduling resource object, a scheduled resource object, a resource object in which the target DCI is located, a specific resource object, a reference resource object, and a resource object set. M and L are positive integers.

In some embodiments, the number of pieces of DCI in Q time units does not exceed P1; and/or
the number of instances of scheduling in Q time units does not exceed P2; and/or
the terminal processing capability in Q time units does not exceed P3.
Q is a positive integer, and P1, P2, and P3 are positive integers.

In some embodiments, the feedback information corresponding to the target DCI is transmitted after a first time period following the target DCI, or the feedback information corresponding to the target DCI is transmitted after a second time period following a last piece of data, the first time period is determined based on a target sub-carrier spacing SCS, and the target SCS is the smallest or largest SCS of an SCS of the DCI and an SCS used for transmitting the feedback information.

In some embodiments, the feedback information corresponding to the target DCI includes at least one of the following:
a positive acknowledgement ACK;
a negative acknowledgement NACK; and
hybrid automatic repeat request acknowledgement HARQ-ACK information corresponding to data.

Alternatively, the feedback information corresponding to the target DCI includes at least one of the following:
an AND result of the HARQ-ACK information corresponding to the data and the NACK; and
an AND result of the HARQ-ACK information corresponding to the data and the ACK.

In some embodiments, the feedback information of the first DCI is the ACK; and/or
the feedback information of the second DCI satisfies any one of the following: including the ACK, including the HARQ-ACK information corresponding to the data, including the ACK and the HARQ-ACK information corresponding to the data, or including the AND result of the ACK and the HARQ-ACK information corresponding to the data; and/or
the feedback information of the third DCI satisfies any one of the following: at least including the HARQ-ACK information corresponding to the data, including the AND result of the NACK and the HARQ-ACK information corresponding to the data, or including the AND result of the ACK and the HARQ-ACK information corresponding to the data.

It is worth noting that the mc-DCI described in this embodiment is multi-cell scheduling DCI or multi-carrier scheduling DCI, and is DCI that can schedule one or more resource objects, or DCI that schedules one or more pieces of data, for example, DCI format 1-3 and/or 0-3.

The sc-DCI is single-cell scheduling DCI or single-carrier scheduling DCI, and is DCI that can schedule one resource object, for example, DCI format 0-0 and/or 0-1 and/or 0-2 and/or 0 and/or 0-4 and/or 1-0 and/or 1-1 and/or 1-2 and/or 1-4. Optionally, the sc-DCI in this embodiment may also be interpreted as group common DCI indicating power control or resource format or preemption or sounding reference signal (Sounding Reference Signal, SRS) information, or the like, for example, DCI format 2-x, where x>=0.

The method for receiving DCI according to the embodiment of this application may be executed by an apparatus for receiving DCI. In the embodiment of this application, an example in which the method for receiving DCI is executed by an apparatus for receiving DCI is taken to describe an apparatus for receiving DCI according to an embodiment of this application.

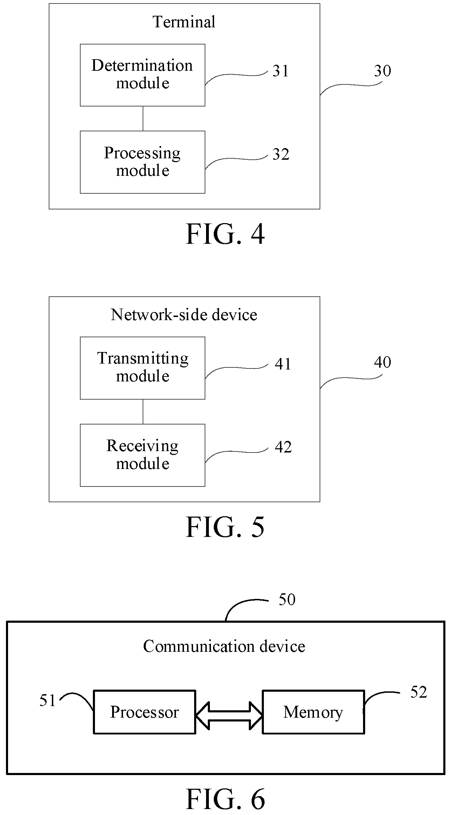

Referring to FIG. 4, FIG. 4 is a schematic structural diagram of an apparatus for receiving DCI according to an embodiment of this application. The apparatus is applied to a terminal 30. As shown in FIG. 4, the apparatus for receiving DCI includes:
a determination module 31, configured to determine target information; and
a processing module 32, configured to receive target DCI and/or determine feedback information corresponding to the target DCI based on the target information, where the target DCI carries dormancy indication information.

The target information includes at least one of the following:
feedback information corresponding to the target DCI;
a resource object corresponding to the target DCI;
downlink assignment index DAI or DCI counting information;
a limit on the number of DCI;
a limit on the number of scheduling; and
a terminal processing capability.

The target DCI includes at least one of the following:
first DCI, without indicating or scheduling data, or without indicating or scheduling data on any resource object;
second DCI, indicating or scheduling one piece of data, or indicating or scheduling data on one resource object; and
third DCI, indicating or scheduling at least two pieces of data, or indicating or scheduling data on at least two resource objects.

In some embodiments, the resource object includes at least one of the following:
a cell, a carrier, a frequency resource, a resource set, a subchannel, a resource pool, a bandwidth part, a resource block set, and a resource element set.

In some embodiments, the target information further includes a position and/or an order of the feedback information corresponding to the target DCI.

In some embodiments, feedback information corresponding to the first DCI and/or the second DCI is located in a first specific sub-codebook, and the first specific sub-codebook corresponds to at least one of the following:
a semi-persistent scheduling SPS physical downlink shared channel PDSCH;
a transmission configuration indication TCI update;
specific downlink control information;
a resource object or data scheduled by specific downlink control information;
DCI that has corresponding feedback information but does not indicate or schedule data;
DCI that has corresponding feedback information but does not indicate or schedule any resource object;
DCI that has corresponding feedback information but does not indicate or schedule data on any resource object;
DCI that indicates or schedules one piece of data;
DCI that indicates or schedules one resource object; and
DCI that indicates or schedules data on one resource object.

In some embodiments, the feedback information corresponding to the target DCI is located in a second specific sub-codebook, and the second specific sub-codebook is a sub-codebook corresponding to at least one of the following:
DCI that indicates or schedules at least two resource objects;
DCI that indicates or schedules at least two pieces of data; and
DCI that indicates or schedules data on at least two resource objects.

In some embodiments, in a case that the target DCI includes the first DCI and/or the second DCI, the DAI or DCI counting information is determined according to the target DCI and a first counting object, and the first counting object includes at least one of the following:
a counting object that indicates or schedules an SPS PDSCH;
a counting object corresponding to a TCI update;
a counting object corresponding to specific downlink control information;
a counting object corresponding to a resource object or data scheduled by specific downlink control information;
a counting object that has corresponding feedback information but does not indicate or schedule data on any resource object;
a counting object that has corresponding feedback information but does not indicate or schedule any resource object;
a counting object that indicates or schedules data on one resource object;
a counting object that indicates or schedules one resource object; and
a counting object that indicates or schedules one piece of data.

The counting object includes at least one of the following: PDCCH, DCI, time unit, pairing of DCI and time unit, pairing of PDCCH and time unit, and pairing of resource object and time unit.

In some embodiments, the DAI or DCI counting information is determined according to the first counting object, and the first counting object includes at least one of the following:
a counting object that indicates or schedules an SPS PDSCH;
a counting object corresponding to a TCI update;
a counting object corresponding to specific downlink control information;
a counting object corresponding to a resource object or data scheduled by specific downlink control information;
a counting object that has corresponding feedback information but does not indicate or schedule data on any resource object;
a counting object that has corresponding feedback information but does not indicate or schedule any resource object;
a counting object that indicates or schedules data on one resource object;
a counting object that indicates or schedules one resource object; and
a counting object that indicates or schedules one piece of data.

The counting object includes at least one of the following: PDCCH, DCI, time unit, pairing of DCI and time unit, pairing of PDCCH and time unit, and pairing of resource object and time unit.

In some embodiments, the DAI or DCI counting information is determined according to the target DCI and a second counting object, and the second counting object includes at least one of the following:
a counting object that indicates or schedules at least two resource objects;
a counting object that indicates or schedules data on at least two resource objects; and
a counting object that indicates or schedules at least two pieces of data.

The counting object includes at least one of the following: PDCCH, DCI, time unit, pairing of DCI and time unit, pairing of PDCCH and time unit, and pairing of resource object and time unit.

In some embodiments, the DAI or DCI counting information is determined according to the second counting object, and the second counting object includes at least one of the following:
a counting object that indicates or schedules at least two resource objects;
a counting object that indicates or schedules data on at least two resource objects; and
a counting object that indicates or schedules at least two pieces of data.

The counting object includes at least one of the following: PDCCH, DCI, time unit, pairing of DCI and time unit, pairing of PDCCH and time unit, and pairing of resource object and time unit.

In some embodiments, the pairing of resource object and time unit is pairing of the first resource object and the time unit, and the first resource object includes at least one of the following:
a specific resource object;
a resource object with the smallest or largest identifier;
a resource object with the smallest or largest index;
a resource object corresponding to a specific identifier;
a resource object with the smallest or largest sub-carrier spacing;
a resource object corresponding to a specific sub-carrier spacing;
a resource object with the largest number of blind detections or strongest blind detection capability;
a resource object with the largest limit on the number of pieces of DCI or maximum number of instances of scheduling;
a resource object with the smallest number of blind detections or weakest blind detection capability;
a resource object with the smallest limit on the number of pieces of DCI or minimum number of instances of scheduling;
a resource object corresponding to the dormancy indication information, enhanced Type-3 codebook related information, or hybrid automatic repeat request acknowledgement HARQ-ACK retransmission related information; and
a resource object corresponding to DCI that has related HARQ-ACK but has no corresponding data.

In some embodiments, the target DCI corresponds to at least one of the following resource objects:
a specific resource object;
a reference resource object;
a scheduling resource object;
a scheduled resource object; and
a resource object in which the target DCI is located.

In some embodiments, the target information is related to the resource object corresponding to the target DCI.

In some embodiments, the resource object corresponding to the first DCI is at least one of the following:
a primary resource object;
an anchor resource object;
a resource object including a specific signal and/or channel;
a resource object that satisfies a first preset condition among indicated and/or scheduled resource objects;
a resource object in which data that satisfies a second preset condition among indicated and/or scheduled data is located;
a resource object of which at least part of a corresponding information field is used for indicating the dormancy indication information; and
a resource object that satisfies a third preset condition among resource objects scheduling no data or having a frequency domain resource assignment field FDRA being invalid information or the FDRA being a specific value.

In some embodiments, the target information is related to a resource object corresponding to the second DCI, and the resource object corresponding to the second DCI is at least one of the following:
a primary resource object;
an anchor resource object;
a resource object including a specific signal and/or channel;
a resource object with data being scheduled;
a resource object that satisfies a fourth preset condition among indicated and/or scheduled resource objects;
a resource object in which data that satisfies a fifth preset condition among indicated and/or scheduled data is located;
a resource object of which at least part of a corresponding information field is used for indicating the dormancy indication information; and
a resource object that satisfies a sixth preset condition among resource objects scheduling no data or having a frequency domain resource assignment field FDRA being invalid information or the FDRA being a specific value.

In some embodiments, the target information is related to a resource object corresponding to the third DCI, and the resource object corresponding to the third DCI is at least one of the following:
a primary resource object;
an anchor resource object;
a resource object including a specific signal and/or channel;
a resource object that satisfies a seventh preset condition among resource objects with data being scheduled;
a resource object in which data that satisfies an eighth preset condition among indicated and/or scheduled data is located;
a resource object that satisfies a ninth preset condition among indicated and/or scheduled resource objects;
a resource object of which at least part of a corresponding information field is used for indicating the dormancy indication information; and
a resource object that satisfies a tenth preset condition among resource objects scheduling no data or having a frequency domain resource assignment field FDRA being invalid information or the FDRA being a specific value.

In some embodiments, a position of feedback information corresponding to the first DCI and/or the second DCI corresponds to a first target resource object corresponding to the first DCI and/or the second DCI, and the first target resource object includes at least one of the following: a primary resource object, an anchor resource object, a resource object including a specific signal and/or channel, a scheduling resource object, a scheduled resource object, a resource object in which the target DCI is located, a specific resource object, a reference resource object, and a resource object set.

In some embodiments, the first DCI is DCI for a first target resource object, and the first target resource object includes at least one of the following: a primary resource object, an anchor resource object, a resource object including a specific signal and/or channel, a scheduling resource object, a scheduled resource object, a resource object in which the target DCI is located, a specific resource object, a reference resource object, and a resource object set.

In some embodiments, in M time units, there exist no more than L pieces of the target DCI or no more than L pieces of mc-DCI; or
in M time units, there exist no more than L pieces of the target DCI or no more than L pieces of single-cell downlink control information sc-DCI that indicates or schedules the first target resource object; or
in M time units, there exist no more than L pieces of mc-DCI or no more than L pieces of sc-DCI that indicates or schedules the first target resource object; or
at least two of the target DCI, mc-DCI, and sc-DCI that indicates or schedules the first target resource object appear in M time units, and the total number of the at least two does not exceed L; or
in M time units, more than L pieces of the target DCI and more than L pieces of mc-DCI do not appear at the same time; or
in M time units, more than L pieces of the target DCI and more than L pieces of sc-DCI that schedules the first target resource object do not appear at the same time; or
in M time units, more than L pieces of mc-DCI and more than L pieces of sc-DCI that schedules the first target resource object do not appear at the same time; or
the terminal does not expect that the total number of at least two of the target DCI, mc-DCI, and sc-DCI that schedules the first target resource object appearing in M time units exceeds L.

M and L are positive integers.

In some embodiments, for the first target resource object,
in M time units, there exist no more than L pieces of the first DCI or no more than L pieces of mc-DCI; or
in M time units, there exist no more than L pieces of the first DCI or no more than L pieces of sc-DCI that indicates or schedules the first target resource object; or
in M time units, there exist no more than L pieces of mc-DCI or no more than L pieces of sc-DCI that indicates or schedules the first target resource object; or
at least two of the first DCI, mc-DCI, and sc-DCI that indicates or schedules the first target resource object appear in M time units, and the total number of the at least two does not exceed L; or
in M time units, more than L pieces of the first DCI and more than L pieces of mc-DCI do not appear at the same time; or
in M time units, more than L pieces of the first DCI and more than L pieces of sc-DCI that schedules the first target resource object do not appear at the same time; or
in M time units, more than L pieces of mc-DCI and more than L pieces of sc-DCI that schedules the first target resource object do not appear at the same time; or
the processing module 32 does not expect that the total number of at least two of the first DCI, mc-DCI, and sc-DCI that schedules the first target resource object appearing in M time units exceeds L.

The first target resource object includes at least one of the following: a primary resource object, an anchor resource object, a resource object including a specific signal and/or channel, a scheduling resource object, a scheduled resource object, a resource object in which the target DCI is located, a specific resource object, a reference resource object, and a resource object set. M and L are positive integers.

In some embodiments, the second DCI is DCI for a second target resource object, and the second target resource object includes at least one of the following: a primary resource object, an anchor resource object, a resource object including a specific signal and/or channel, a scheduling resource object, a scheduled resource object, a resource object in which the target DCI is located, a specific resource object, a reference resource object, and a resource object set.

In some embodiments, for the second target resource object,
in M time units, there exist no more than L pieces of the second DCI or no more than L pieces of mc-DCI; or
in M time units, there exist no more than L pieces of the second DCI or no more than L pieces of sc-DCI that indicates or schedules the second target resource object; or
in M time units, there exist no more than L pieces of mc-DCI or no more than L pieces of sc-DCI that indicates or schedules the second target resource object; or
at least two of the second DCI, mc-DCI, and sc-DCI that indicates or schedules the second target resource object appear in M time units, and the total number of the at least two does not exceed L; or
in M time units, more than L pieces of the second DCI and more than L pieces of mc-DCI do not appear at the same time; or
in M time units, more than L pieces of the second DCI and more than L pieces of sc-DCI that schedules the second target resource object do not appear at the same time; or
in M time units, more than L pieces of mc-DCI and more than L pieces of sc-DCI that schedules the second target resource object do not appear at the same time; or
the processing module 32 does not expect that the total number of at least two of the second DCI, mc-DCI, and sc-DCI that schedules the second target resource object appearing in M time units exceeds L.

The second target resource object includes at least one of the following: a primary resource object, an anchor resource object, a resource object including a specific signal and/or channel, a scheduling resource object, a scheduled resource object, a resource object in which the target DCI is located, a specific resource object, a reference resource object, and a resource object set. M and L are positive integers.

In some embodiments, the number of pieces of DCI in Q time units does not exceed P1; and/or
the number of instances of scheduling in Q time units does not exceed P2; and/or
the terminal processing capability in Q time units does not exceed P3.
Q is a positive integer, and P1, P2, and P3 are positive integers.

In some embodiments, the feedback information corresponding to the target DCI is transmitted after a first time period following the target DCI, or the feedback information corresponding to the target DCI is transmitted after a second time period following a last piece of data, the first time period is determined based on a target sub-carrier spacing SCS, and the target SCS is the smallest or largest SCS of an SCS of the DCI and an SCS used for transmitting the feedback information.

In some embodiments, the feedback information corresponding to the target DCI includes at least one of the following:
a positive acknowledgement ACK;
a negative acknowledgement NACK; and
hybrid automatic repeat request acknowledgement HARQ-ACK information corresponding to data.

Alternatively, the feedback information corresponding to the target DCI includes at least one of the following:
an AND result of the HARQ-ACK information corresponding to the data and the NACK; and
an AND result of the HARQ-ACK information corresponding to the data and the ACK.

In some embodiments, the feedback information of the first DCI is the ACK; and/or
the feedback information of the second DCI satisfies any one of the following: including the ACK, including the HARQ-ACK information corresponding to the data, including the ACK and the HARQ-ACK information corresponding to the data, or including the AND result of the ACK and the HARQ-ACK information corresponding to the data; and/or
the feedback information of the third DCI satisfies any one of the following: at least including the HARQ-ACK information corresponding to the data, including the AND result of the NACK and the HARQ-ACK information corresponding to the data, or including the AND result of the ACK and the HARQ-ACK information corresponding to the data.

In the embodiments of this application, the apparatus for receiving DCI may be an electronic device, such as an electronic device with an operating system, or a component within an electronic device, such as an integrated circuit or chip. The electronic device may be a terminal or any other device except a terminal. Exemplarily, the terminal may include but is not limited to the type of the terminal 11 listed above, and the other device may be a server, a network attached storage (Network Attached Storage, NAS) or the like, which is not specifically limited in the embodiments of this application.

The apparatus for receiving DCI according to the embodiments of this application can implement the various processes implemented in the embodiments of the method for receiving DCI and achieve the same technical effect, and details are not described herein again to avoid repetition.

Referring to FIG. 5, FIG. 5 is a schematic structural diagram of an apparatus for transmitting DCI according to an embodiment of this application. The apparatus is applied to a network-side device 40. As shown in FIG. 5, the apparatus for transmitting DCI includes:
a transmitting module 41, configured to transmit target DCI, where the target DCI carries dormancy indication information; and
a receiving module 42, configured to receive feedback information corresponding to the target DCI from a terminal.

The target DCI includes at least one of the following:
first DCI, without indicating or scheduling data, or without indicating or scheduling data on any resource object;
second DCI, indicating or scheduling one piece of data, or indicating or scheduling data on one resource object; and
third DCI, indicating or scheduling at least two pieces of data, or indicating or scheduling data on at least two resource objects.

In some embodiments, the resource object includes at least one of the following:
a cell, a carrier, a frequency resource, a resource set, a subchannel, a resource pool, a bandwidth part, a resource block set, and a resource element set.

In some embodiments, feedback information corresponding to the first DCI and/or the second DCI is located in a first specific sub-codebook, and the first specific sub-codebook corresponds to at least one of the following:
a semi-persistent scheduling SPS physical downlink shared channel PDSCH;
a transmission configuration indication TCI update;
specific downlink control information;
a resource object or data scheduled by specific downlink control information;
DCI that has corresponding feedback information but does not indicate or schedule data;
DCI that has corresponding feedback information but does not indicate or schedule any resource object;
DCI that has corresponding feedback information but does not indicate or schedule data on any resource object;
DCI that indicates or schedules one piece of data;
DCI that indicates or schedules one resource object; and
DCI that indicates or schedules data on one resource object.

In some embodiments, the feedback information corresponding to the target DCI is located in a second specific sub-codebook, and the second specific sub-codebook is a sub-codebook corresponding to at least one of the following:
DCI that indicates or schedules at least two resource objects;
DCI that indicates or schedules at least two pieces of data; and
DCI that indicates or schedules data on at least two resource objects.

In some embodiments, in a case that the target DCI includes the first DCI and/or the second DCI, the DAI or DCI counting information is determined according to the target DCI and a first counting object, and the first counting object includes at least one of the following:
a counting object that indicates or schedules an SPS PDSCH;
a counting object corresponding to a TCI update;
a counting object corresponding to specific downlink control information;
a counting object corresponding to a resource object or data scheduled by specific downlink control information;
a counting object that has corresponding feedback information but does not indicate or schedule data on any resource object;
a counting object that has corresponding feedback information but does not indicate or schedule any resource object;
a counting object that indicates or schedules data on one resource object;
a counting object that indicates or schedules one resource object; and
a counting object that indicates or schedules one piece of data.

The counting object includes at least one of the following: PDCCH, DCI, time unit, pairing of DCI and time unit, pairing of PDCCH and time unit, and pairing of resource object and time unit.

In some embodiments, the DAI or DCI counting information is determined according to the first counting object, and the first counting object includes at least one of the following:
a counting object that indicates or schedules an SPS PDSCH;
a counting object corresponding to a TCI update;
a counting object corresponding to specific downlink control information;
a counting object corresponding to a resource object or data scheduled by specific downlink control information;
a counting object that has corresponding feedback information but does not indicate or schedule data on any resource object;
a counting object that has corresponding feedback information but does not indicate or schedule any resource object;
a counting object that indicates or schedules data on one resource object;
a counting object that indicates or schedules one resource object; and
a counting object that indicates or schedules one piece of data.

The counting object includes at least one of the following: PDCCH, DCI, time unit, pairing of DCI and time unit, pairing of PDCCH and time unit, and pairing of resource object and time unit.

In some embodiments, the DAI or DCI counting information is determined according to the target DCI and a second counting object, and the second counting object includes at least one of the following:
a counting object that indicates or schedules at least two resource objects;
a counting object that indicates or schedules data on at least two resource objects; and
a counting object that indicates or schedules at least two pieces of data.

The counting object includes at least one of the following: PDCCH, DCI, time unit, pairing of DCI and time unit, pairing of PDCCH and time unit, and pairing of resource object and time unit.

In some embodiments, the DAI or DCI counting information is determined according to the second counting object, and the second counting object includes at least one of the following:
a counting object that indicates or schedules at least two resource objects;
a counting object that indicates or schedules data on at least two resource objects; and
a counting object that indicates or schedules at least two pieces of data.

The counting object includes at least one of the following: PDCCH, DCI, time unit, pairing of DCI and time unit, pairing of PDCCH and time unit, and pairing of resource object and time unit.

In some embodiments, the pairing of resource object and time unit is pairing of the first resource object and the time unit, and the first resource object includes at least one of the following: a specific resource object;
a resource object with the smallest or largest identifier;
a resource object with the smallest or largest index;
a resource object corresponding to a specific identifier;
a resource object with the smallest or largest sub-carrier spacing;
a resource object corresponding to a specific sub-carrier spacing;
a resource object with the largest number of blind detections or strongest blind detection capability;
a resource object with the largest limit on the number of pieces of DCI or maximum number of instances of scheduling;
a resource object with the smallest number of blind detections or weakest blind detection capability;
a resource object with the smallest limit on the number of pieces of DCI or minimum number of instances of scheduling;
a resource object corresponding to the dormancy indication information, enhanced Type-3 codebook related information, or hybrid automatic repeat request acknowledgement HARQ-ACK retransmission related information; and
a resource object corresponding to DCI that has related HARQ-ACK but has no corresponding data.

In some embodiments, the target DCI corresponds to at least one of the following resource objects:
a specific resource object;
a reference resource object;
a scheduling resource object;
a scheduled resource object; and
a resource object in which the target DCI is located.

In some embodiments, the resource object corresponding to the first DCI is at least one of the following:
a primary resource object;
an anchor resource object;
a resource object including a specific signal and/or channel;
a resource object that satisfies a first preset condition among indicated and/or scheduled resource objects;
a resource object in which data that satisfies a second preset condition among indicated and/or scheduled data is located;
a resource object of which at least part of a corresponding information field is used for indicating the dormancy indication information; and
a resource object that satisfies a third preset condition among resource objects scheduling no data or having a frequency domain resource assignment field FDRA being invalid information or the FDRA being a specific value.

In some embodiments, the target information is related to a resource object corresponding to the second DCI, and the resource object corresponding to the second DCI is at least one of the following:
a primary resource object;
an anchor resource object;
a resource object including a specific signal and/or channel;
a resource object with data being scheduled;
a resource object that satisfies a fourth preset condition among indicated and/or scheduled resource objects;
a resource object in which data that satisfies a fifth preset condition among indicated and/or scheduled data is located;
a resource object of which at least part of a corresponding information field is used for indicating the dormancy indication information; and
a resource object that satisfies a sixth preset condition among resource objects scheduling no data or having a frequency domain resource assignment field FDRA being invalid information or the FDRA being a specific value.

In some embodiments, the target information is related to a resource object corresponding to the third DCI, and the resource object corresponding to the third DCI is at least one of the following:
a primary resource object;
an anchor resource object;
a resource object including a specific signal and/or channel;
a resource object that satisfies a seventh preset condition among resource objects with data being scheduled;
a resource object in which data that satisfies an eighth preset condition among indicated and/or scheduled data is located;
a resource object that satisfies a ninth preset condition among indicated and/or scheduled resource objects;
a resource object of which at least part of a corresponding information field is used for indicating the dormancy indication information; and
a resource object that satisfies a tenth preset condition among resource objects scheduling no data or having a frequency domain resource assignment field FDRA being invalid information or the FDRA being a specific value.

In some embodiments, a position of feedback information corresponding to the first DCI and/or the second DCI corresponds to a first target resource object corresponding to the first DCI and/or the second DCI, and the first target resource object includes at least one of the following: a primary resource object, an anchor resource object, a resource object including a specific signal and/or channel, a scheduling resource object, a scheduled resource object, a resource object in which the target DCI is located, a specific resource object, a reference resource object, and a resource object set.

In some embodiments, the first DCI is DCI for the first target resource object, and the first target resource object includes at least one of the following: a primary resource object, an anchor resource object, a resource object including a specific signal and/or channel, a scheduling resource object, a scheduled resource object, a resource object in which the target DCI is located, a specific resource object, a reference resource object, and a resource object set.

In some embodiments, in M time units, there exist no more than L pieces of the target DCI or no more than L pieces of mc-DCI; or
in M time units, there exist no more than L pieces of the target DCI or no more than L pieces of single-cell downlink control information sc-DCI that indicates or schedules the first target resource object; or
in M time units, there exist no more than L pieces of mc-DCI or no more than L pieces of sc-DCI that indicates or schedules the first target resource object; or
at least two of the target DCI, mc-DCI, and sc-DCI that indicates or schedules the first target resource object appear in M time units, and the total number of the at least two does not exceed L; or
in M time units, more than L pieces of the target DCI and more than L pieces of mc-DCI do not appear at the same time; or
in M time units, more than L pieces of the target DCI and more than L pieces of sc-DCI that schedules the first target resource object do not appear at the same time; or
in M time units, more than L pieces of mc-DCI and more than L pieces of sc-DCI that schedules the first target resource object do not appear at the same time; or
the terminal does not expect that the total number of at least two of the target DCI, mc-DCI, and sc-DCI that schedules the first target resource object appearing in M time units exceeds L.

M and L are positive integers.

In some embodiments, for the first target resource object,
in M time units, there exist no more than L pieces of the first DCI or no more than L pieces of mc-DCI; or
in M time units, there exist no more than L pieces of the first DCI or no more than L pieces of sc-DCI that indicates or schedules the first target resource object; or
in M time units, there exist no more than L pieces of mc-DCI or no more than L pieces of sc-DCI that indicates or schedules the first target resource object; or
at least two of the first DCI, mc-DCI, and sc-DCI that indicates or schedules the first target resource object appear in M time units, and the total number of the at least two does not exceed L; or
in M time units, more than L pieces of the first DCI and more than L pieces of mc-DCI do not appear at the same time; or
in M time units, more than L pieces of the first DCI and more than L pieces of sc-DCI that schedules the first target resource object do not appear at the same time; or
in M time units, more than L pieces of mc-DCI and more than L pieces of sc-DCI that schedules the first target resource object do not appear at the same time.

The first target resource object includes at least one of the following: a primary resource object, an anchor resource object, a resource object including a specific signal and/or channel, a scheduling resource object, a scheduled resource object, a resource object in which the target DCI is located, a specific resource object, a reference resource object, and a resource object set. M and L are positive integers.

In some embodiments, the second DCI is DCI for a second target resource object, and the second target resource object includes at least one of the following: a primary resource object, an anchor resource object, a resource object including a specific signal and/or channel, a scheduling resource object, a scheduled resource object, a resource object in which the target DCI is located, a specific resource object, a reference resource object, and a resource object set.

In some embodiments, for the second target resource object,
in M time units, there exist no more than L pieces of the second DCI or no more than L pieces of mc-DCI; or
in M time units, there exist no more than L pieces of the second DCI or no more than L pieces of sc-DCI that indicates or schedules the second target resource object; or
in M time units, there exist no more than L pieces of mc-DCI or no more than L pieces of sc-DCI that indicates or schedules the second target resource object; or
at least two of the second DCI, mc-DCI, and sc-DCI that indicates or schedules the second target resource object appear in M time units, and the total number of the at least two does not exceed L; or
in M time units, more than L pieces of the second DCI and more than L pieces of mc-DCI do not appear at the same time; or
in M time units, more than L pieces of the second DCI and more than L pieces of sc-DCI that schedules the second target resource object do not appear at the same time; or
in M time units, more than L pieces of mc-DCI and more than L pieces of sc-DCI that schedules the second target resource object do not appear at the same time.

The second target resource object includes at least one of the following: a primary resource object, an anchor resource object, a resource object including a specific signal and/or channel, a scheduling resource object, a scheduled resource object, a resource object in which the target DCI is located, a specific resource object, a reference resource object, and a resource object set. M and L are positive integers.

In some embodiments, the number of pieces of DCI in Q time units does not exceed P1; and/or
the number of instances of scheduling in Q time units does not exceed P2; and/or
the terminal processing capability in Q time units does not exceed P3.
Q is a positive integer, and P1, P2, and P3 are positive integers.

In some embodiments, the feedback information corresponding to the target DCI is transmitted after a first time period following the target DCI, or the feedback information corresponding to the target DCI is transmitted after a second time period following a last piece of data, the first time period is determined based on a target sub-carrier spacing SCS, and the target SCS is the smallest or largest SCS of an SCS of the DCI and an SCS used for transmitting the feedback information.

In some embodiments, the feedback information corresponding to the target DCI includes at least one of the following:
a positive acknowledgement ACK;
a negative acknowledgement NACK; and
hybrid automatic repeat request acknowledgement HARQ-ACK information corresponding to data.

Alternatively, the feedback information corresponding to the target DCI includes at least one of the following:
an AND result of the HARQ-ACK information corresponding to the data and the NACK; and
an AND result of the HARQ-ACK information corresponding to the data and the ACK.

In some embodiments, the feedback information of the first DCI is the ACK; and/or
the feedback information of the second DCI satisfies any one of the following: including the ACK, including the HARQ-ACK information corresponding to the data, including the ACK and the HARQ-ACK information corresponding to the data, or including the AND result of the ACK and the HARQ-ACK information corresponding to the data; and/or
the feedback information of the third DCI satisfies any one of the following: at least including the HARQ-ACK information corresponding to the data, including the AND result of the NACK and the HARQ-ACK information corresponding to the data, or including the AND result of the ACK and the HARQ-ACK information corresponding to the data.

The apparatus for transmitting DCI according to the embodiments of this application can implement the various processes implemented in the embodiment of the method for transmitting DCI and achieve the same technical effect, and details are not described herein again to avoid repetition.

As shown in FIG. 6, an embodiment of this application further provides a communication device 50, which includes a processor 51 and a memory 52. The memory 52 stores a program or instruction runnable on the processor 51. For example, in a case that the communication device 50 is a terminal, the program or instruction, when executed by the processor 51, implements the various steps of the embodiments of the method for receiving DCI, and can achieve the same technical effect. In a case that the communication device 50 is a network-side device, the program or instruction, when executed by the processor 51, implements the various steps of the embodiments of the method for transmitting DCI, and can achieve the same technical effect, and details are not described herein again to avoid repetition.

An embodiment of this application further provides a terminal, which includes a processor and a communication interface. The communication interface is coupled with the processor, and the processor is configured to run a program or instruction to implement the steps in the method embodiment shown in FIG. 2. This terminal embodiment corresponds to the foregoing terminal-side method embodiments. The various implementation processes and implementation modes in the foregoing method embodiments are applicable to this terminal embodiment, and can achieve the same technical effect.

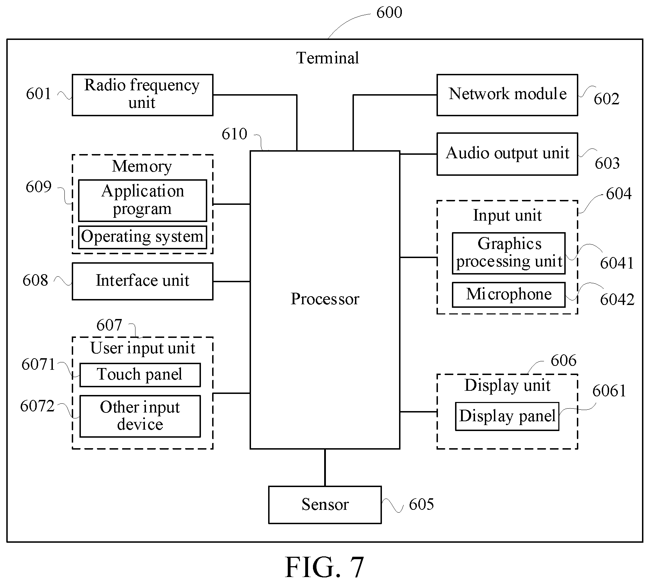

Specifically, FIG. 7 is a schematic diagram of a hardware structure of a terminal according to an embodiment of this application.

The terminal 600 includes, but not limited to, at least some components of a radio frequency unit 601, a network module 602, an audio output unit 603, an input unit 604, a sensor 605, a display unit 606, a user input unit 607, an interface unit 608, a memory 609, a processor 610, and the like.

It can be understood by those skilled in the art that the terminal 600 may further include a power supply (such as a battery) for supplying power to the components. The power supply may be logically connected to the processor 610 by a power supply management system, thus implementing functions such as charging, discharging, and power consumption management by using the power supply management system. The terminal structure illustrated in FIG. 7 constitutes no limitation on the terminal, and the terminal may include more or fewer components than those illustrated therein, or some components may be combined, or a different component deployment may be used, and details are not described herein again.

It is to be understood that in the embodiments of this application, the input unit 604 may include a graphics processing unit (Graphics Processing Unit, GPU) 6041 and a microphone 6042. The graphics processing unit 6041 performs processing on image data of a static picture or a video that is obtained by an image capture device (for example, a camera) in a video capture mode or an image capture mode. The display unit 606 may include a display panel 6061. The display panel 6061 may be configured in the form of liquid crystal display, organic light emitting diode, or the like. The user input unit 607 includes at least one of a touch panel 6071 and another input device 6072. The touch panel 6071 is also referred to as a touch screen. The touch panel 6071 may include two parts, namely a touch detection apparatus and a touch controller. The other input device 6072 may include, but is not limited to, a physical keyboard, a functional key (such as a volume control key or an on/off key), a track ball, a mouse, and a joystick, and details are not described herein again.

In an embodiment of this application, after receiving downlink data from the network-side device, the radio frequency unit 601 may transmit the downlink data to the processor 610 for processing. In addition, the radio frequency unit 601 may transmit uplink data to the network-side device. Generally, the radio frequency unit 601 includes, but is not limited to, an antenna, an amplifier, a transceiver, a coupler, a low noise amplifier, a duplexer, and the like.

The memory 609 may be configured to store a software program or instruction and various data. The memory 609 may mainly include a first storage area for storing a program or instruction and a second storage area for storing data. The first storage area may store an operating system, an application program or instruction required by at least one function (for example, a sound playback function or an image playback function), and the like. In addition, the memory 609 may include a volatile memory or a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM) or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM), or a direct rambus RAM (Direct Rambus RAM, DRRAM). The memory 609 in the embodiments of this application includes, but is not limited to, these memories and any other suitable types of memories.

The processor 610 may include one or more processing units. Optionally, the processor 610 integrates an application processor and a modem processor. The application processor mainly processes operations involving operating systems, user interfaces, and application programs. The modem processor mainly processes wireless communication signals. For example, it is a baseband processor. It may be understood that the foregoing modem processor may not be integrated into the processor 610.

It may be understood that for the implementation processes of the implementation modes mentioned in the embodiments, reference may be made to the relevant description in the foregoing method embodiments, and the same or corresponding technical effect can be achieved, and details are not described herein again to avoid repetition.

An embodiment of this application further provides a network-side device, which includes a processor and a communication interface. The communication interface is coupled with the processor, and the processor is configured to run a program or instruction to implement the steps of the method embodiment shown in FIG. 3. This network-side device embodiment corresponds to the foregoing network-side device method embodiments. The various implementation processes and implementation modes in the foregoing method embodiments are applicable to this network-side device embodiment, and can achieve the same technical effect.

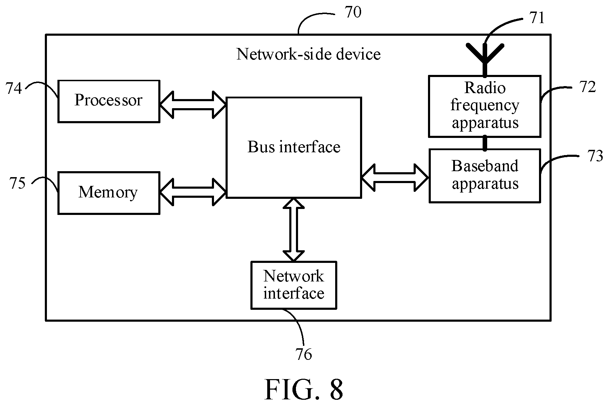

Specifically, an embodiment of this application further provides a network-side device. As shown in FIG. 8, the network-side device 70 includes: an antenna 71, a radio frequency apparatus 72, a baseband apparatus 73, a processor 74, and a memory 75. The antenna 71 is connected with the radio frequency apparatus 72. In an uplink direction, the radio frequency apparatus 72 receives information through the antenna 71 and transmits the received information to the baseband apparatus 73 for processing. In a downlink direction, the baseband apparatus 73 processes the information to be transmitted and transmits the information to the radio frequency apparatus 72. The radio frequency apparatus 72 processes the received information and transmits the information out through the antenna 71.

The method executed by the network-side device in the foregoing embodiments can be implemented in the baseband apparatus 73. The baseband apparatus 73 includes a baseband processor.

The baseband apparatus 73 may include, for example, at least one baseband board. Multiple chips are provided on the baseband board. As shown in FIG. 8, one of the chips, for example, is the baseband processor, and is connected with the memory 75 through a bus interface to call a program in the memory 75, so as to perform operations of a network device illustrated in the foregoing method embodiments.

The network-side device may further include a network interface 76. The interface is, for example, a common public radio interface (Common Public Radio Interface, CPRI).

Specifically, the network-side device 70 according to the embodiments of this application further includes an instruction or a program stored in the memory 75 and runnable on the processor 74. The processor 74 calls the instruction or the program in the memory 75 to execute the method executed by various modules shown in FIG. 5, and can achieve the same technical effect, and details are not described herein again to avoid repetition.

An embodiment of this application further provides a readable storage medium. A program or an instruction is stored on the readable storage medium. The program or the instruction, when executed by a processor, implements the various processes of the foregoing method embodiments, and can achieve the same technical effect, and details are not described herein again to avoid repetition.

The processor is a processor in the terminal in the foregoing embodiments. The readable storage medium may include a computer-readable storage medium, such as a computer read-only memory (ROM), a random access memory (RAM), a magnetic disk, an optical disc, or the like. In some examples, the readable storage medium may be a non-transitory readable storage medium.

An embodiment of this application further provides a chip. The chip includes a processor and a communication interface. The communication interface is coupled with the processor, and the processor is configured to run a program or an instruction to implement the various processes of the foregoing method embodiments, and can achieve the same technical effect, and details are not described herein again to avoid repetition.

It is to be understood that the chip provided in the embodiments of this application may also be referred to as a system-level chip, a system chip, a chip system, or a system on chip.

An embodiment of this application further provides a computer program/program product. The computer program/program product is stored in a storage medium. The computer program/program product is executed by at least one processor to implement the various processes of the foregoing method embodiments, and can achieve the same technical effect, and details are not described herein again to avoid repetition.

An embodiment of this application further provides a communication system, which includes a terminal and a network-side device. The terminal may be configured to perform the steps of the method for receiving DCI as described above, and the network-side device may be configured to perform the steps of the method for transmitting DCI as described above.

It should be noted that the terms "include", "comprise" or any other variation thereof used herein are intended to cover non-exclusive inclusion, so that a process, method, item or apparatus including a series of elements not only includes those elements, but also includes other elements that are not explicitly listed, or also includes elements inherent in such a process, method, item or apparatus. Without further limitations, the element limited by the statement "including a..." does not preclude the presence of another identical element in a process, method, item or apparatus including that element. In addition, it should be noted that the scope of the methods and apparatuses in the embodiments of this application is not limited to performing functions in the order shown or discussed, but may also include performing functions in a substantially simultaneous manner or in the opposite order according to the involved functions. For example, the described methods may be executed in a different order from the described ones, and various steps may also be added, omitted or combined. In addition, features described with reference to certain examples may be combined in other examples.

According to the descriptions of the foregoing implementations, those skilled in the art may clearly understand that the methods in the foregoing embodiments may be implemented by using a computer software product and a necessary universal hardware platform, or may certainly be implemented by using hardware. The computer software product is stored in a storage medium (e.g., an ROM, an RAM, a magnetic disk, or an optical disc), and includes several instructions, to enable a terminal or a network-side device to perform the methods described in the embodiments of this application.

The embodiments of this application have been described above with reference to the drawings. However, this application is not limited to the specific implementations above. The specific implementations above are only exemplary rather than restrictive. Under the inspiration of this application, those of ordinary skill in the art may make many implementations without departing from the essence and the scope of protection of this application, which, however, still fall within the scope of protection of this application.

## Claims

1. A method for receiving downlink control information DCI, comprising:
determining target information by a terminal; and
receiving target DCI and/or determining feedback information corresponding to the target DCI by the terminal based on the target information, wherein the target DCI carries dormancy indication information;
wherein the target information comprises at least one of the following:
a resource object corresponding to the target DCI;
downlink assignment index DAI or DCI counting information;
a limit on the number of DCI;
a limit on the number of scheduling; and
a terminal processing capability;
wherein the target DCI comprises at least one of the following:
first DCI, without indicating or scheduling data, or without indicating or scheduling data on any resource object;
second DCI, indicating or scheduling one piece of data, or indicating or scheduling data on one resource object; and
third DCI, indicating or scheduling at least two pieces of data, or indicating or scheduling data on at least two resource objects.

2. The method according to claim 1, wherein the target information further comprises a position and/or an order of the feedback information corresponding to the target DCI.

3. The method according to claim 1, wherein feedback information corresponding to the first DCI and/or the second DCI is located in a first specific sub-codebook, and the first specific sub-codebook corresponds to at least one of the following:
a semi-persistent scheduling SPS physical downlink shared channel PDSCH;
a transmission configuration indication TCI update;
specific downlink control information;
a resource object or data scheduled by specific downlink control information;
DCI that has corresponding feedback information but does not indicate or schedule data;
DCI that has corresponding feedback information but does not indicate or schedule any resource object;
DCI that has corresponding feedback information but does not indicate or schedule data on any resource object;
DCI that indicates or schedules one piece of data;
DCI that indicates or schedules one resource object; and
DCI that indicates or schedules data on one resource object.

4. The method according to claim 1, wherein the feedback information corresponding to the target DCI is located in a second specific sub-codebook, and the second specific sub-codebook is a sub-codebook corresponding to at least one of the following:
DCI that indicates or schedules at least two resource objects;
DCI that indicates or schedules at least two pieces of data; and
DCI that indicates or schedules data on at least two resource objects.

5. The method according to claim 1, wherein the DAI or DCI counting information is determined according to a first counting object, and the first counting object comprises at least one of the following:
a counting object that indicates or schedules an SPS PDSCH;
a counting object corresponding to a TCI update;
a counting object corresponding to specific downlink control information;
a counting object corresponding to a resource object or data scheduled by specific downlink control information;
a counting object that has corresponding feedback information but does not indicate or schedule data on any resource object;
a counting object that has corresponding feedback information but does not indicate or schedule any resource object;
a counting object that indicates or schedules data on one resource object;
a counting object that indicates or schedules one resource object; and
a counting object that indicates or schedules one piece of data;
wherein the counting object comprises at least one of the following: PDCCH, DCI, time unit, pairing of DCI and time unit, pairing of PDCCH and time unit, and pairing of resource object and time unit.

6. The method according to claim 1, wherein the DAI or DCI counting information is determined according to a second counting object, and the second counting object comprises at least one of the following:
a counting object that indicates or schedules at least two resource objects;
a counting object that indicates or schedules data on at least two resource objects; and
a counting object that indicates or schedules at least two pieces of data;
wherein the counting object comprises at least one of the following: PDCCH, DCI, time unit, pairing of DCI and time unit, pairing of PDCCH and time unit, and pairing of resource object and time unit.

7. The method according to claim 5 or 6, wherein the pairing of resource object and time unit is pairing of a first resource object and the time unit, and the first resource object comprises at least one of the following:
a specific resource object;
a resource object with the smallest or largest identifier;
a resource object with the smallest or largest index;
a resource object corresponding to a specific identifier;
a resource object with the smallest or largest sub-carrier spacing;
a resource object corresponding to a specific sub-carrier spacing;
a resource object with the largest number of blind detections or strongest blind detection capability;
a resource object with the largest limit on the number of pieces of DCI or maximum number of instances of scheduling;
a resource object with the smallest number of blind detections or weakest blind detection capability;
a resource object with the smallest limit on the number of pieces of DCI or minimum number of instances of scheduling;
a resource object corresponding to the dormancy indication information, enhanced Type-3 codebook related information, or hybrid automatic repeat request acknowledgement HARQ-ACK retransmission related information; and
a resource object corresponding to DCI that has related HARQ-ACK but has no corresponding data.

8. The method according to claim 1, wherein the target DCI corresponds to at least one of the following resource objects:
a specific resource object;
a reference resource object;
a scheduling resource object;
a scheduled resource object; and
a resource object in which the target DCI is located.

9. The method according to claim 1, wherein the target information is related to a resource object corresponding to the first DCI, and the resource object corresponding to the first DCI is at least one of the following:
a primary resource object;
an anchor resource object;
a resource object comprising a specific signal and/or channel;
a resource object that satisfies a first preset condition among indicated and/or scheduled resource objects;
a resource object in which data that satisfies a second preset condition among indicated and/or scheduled data is located;
a resource object of which at least part of a corresponding information field is used for indicating the dormancy indication information; and
a resource object that satisfies a third preset condition among resource objects scheduling no data or having a frequency domain resource assignment field FDRA being invalid information or the FDRA being a specific value.

10. The method according to claim 8, wherein the target information is related to a resource object corresponding to the second DCI, and the resource object corresponding to the second DCI is at least one of the following:
a primary resource object;
an anchor resource object;
a resource object comprising a specific signal and/or channel;
a resource object with data being scheduled;
a resource object that satisfies a fourth preset condition among indicated and/or scheduled resource objects;
a resource object in which data that satisfies a fifth preset condition among indicated and/or scheduled data is located;
a resource object of which at least part of a corresponding information field is used for indicating the dormancy indication information; and
a resource object that satisfies a sixth preset condition among resource objects scheduling no data or having a frequency domain resource assignment field FDRA being invalid information or the FDRA being a specific value.

11. The method according to claim 8, wherein the target information is related to a resource object corresponding to the third DCI, and the resource object corresponding to the third DCI is at least one of the following:
a primary resource object;
an anchor resource object;
a resource object comprising a specific signal and/or channel;
a resource object that satisfies a seventh preset condition among resource objects with data being scheduled;
a resource object in which data that satisfies an eighth preset condition among indicated and/or scheduled data is located;
a resource object that satisfies a ninth preset condition among indicated and/or scheduled resource objects;
a resource object of which at least part of a corresponding information field is used for indicating the dormancy indication information; and
a resource object that satisfies a tenth preset condition among resource objects scheduling no data or having a frequency domain resource assignment field FDRA being invalid information or the FDRA being a specific value.

12. The method according to claim 1, wherein a position of feedback information corresponding to the first DCI and/or the second DCI corresponds to a first target resource object corresponding to the first DCI and/or the second DCI, and the first target resource object comprises at least one of the following: a primary resource object, an anchor resource object, a resource object comprising a specific signal and/or channel, a scheduling resource object, a scheduled resource object, a resource object in which the target DCI is located, a specific resource object, a reference resource object, and a resource object set.

13. The method according to claim 1, wherein the first DCI is DCI for a first target resource object, and the first target resource object comprises at least one of the following: a primary resource object, an anchor resource object, a resource object comprising a specific signal and/or channel, a scheduling resource object, a scheduled resource object, a resource object in which the target DCI is located, a specific resource object, a reference resource object, and a resource object set; or
the second DCI is DCI for a second target resource object, and the second target resource object comprises at least one of the following: a primary resource object, an anchor resource object, a resource object comprising a specific signal and/or channel, a scheduling resource object, a scheduled resource object, a resource object in which the target DCI is located, a specific resource object, a reference resource object, and a resource object set.

14. The method according to claim 12, wherein
in M time units, there exist no more than L pieces of the target DCI or no more than L pieces of mc-DCI; or
in M time units, there exist no more than L pieces of the target DCI or no more than L pieces of single-cell downlink control information sc-DCI that indicates or schedules the first target resource object; or
in M time units, there exist no more than L pieces of mc-DCI or no more than L pieces of sc-DCI that indicates or schedules the first target resource object; or
at least two of the target DCI, mc-DCI, and sc-DCI that indicates or schedules the first target resource object appear in M time units, and the total number of the at least two does not exceed L; or
in M time units, more than L pieces of the target DCI and more than L pieces of mc-DCI do not appear at the same time; or
in M time units, more than L pieces of the target DCI and more than L pieces of sc-DCI that schedules the first target resource object do not appear at the same time; or
in M time units, more than L pieces of mc-DCI and more than L pieces of sc-DCI that schedules the first target resource object do not appear at the same time; or
the terminal does not expect that the total number of at least two of the target DCI, mc-DCI, and sc-DCI that schedules the first target resource object appearing in M time units exceeds L;
wherein M and L are positive integers.

15. The method according to claim 1, wherein
the number of pieces of DCI in Q time units does not exceed P1; and/or
the number of instances of scheduling in Q time units does not exceed P2; and/or
the terminal processing capability in Q time units does not exceed P3;
wherein Q is a positive integer, and P1, P2, and P3 are positive integers.

16. The method according to claim 1, wherein the feedback information corresponding to the target DCI is transmitted after a first time period following the target DCI, or the feedback information corresponding to the target DCI is transmitted after a second time period following a last piece of data, the first time period is determined based on a target sub-carrier spacing SCS, and the target SCS is the smallest or largest SCS of an SCS of the DCI and an SCS used for transmitting the feedback information.

17. The method according to claim 1, wherein the feedback information corresponding to the target DCI comprises at least one of the following:
a positive acknowledgement ACK;
a negative acknowledgement NACK; and
hybrid automatic repeat request acknowledgement HARQ-ACK information corresponding to data;
or the feedback information corresponding to the target DCI comprises at least one of the following:
an AND result of the HARQ-ACK information corresponding to the data and the NACK; and
an AND result of the HARQ-ACK information corresponding to the data and the ACK.

18. The method according to claim 17, wherein
the feedback information of the first DCI is the ACK; and/or
the feedback information of the second DCI satisfies any one of the following: comprising the ACK, comprising the HARQ-ACK information corresponding to the data, comprising the ACK and the HARQ-ACK information corresponding to the data, or comprising the AND result of the ACK and the HARQ-ACK information corresponding to the data; and/or
the feedback information of the third DCI satisfies any one of the following: at least comprising the HARQ-ACK information corresponding to the data, comprising the AND result of the NACK and the HARQ-ACK information corresponding to the data, or comprising the AND result of the ACK and the HARQ-ACK information corresponding to the data.

19. A method for transmitting downlink control information DCI, comprising:
transmitting target DCI by a network-side device, wherein the target DCI carries dormancy indication information; and
receiving feedback information corresponding to the target DCI from a terminal by the network-side device;
wherein the target DCI comprises at least one of the following:
first DCI, without indicating or scheduling data, or without indicating or scheduling data on any resource object;
second DCI, indicating or scheduling one piece of data, or indicating or scheduling data on one resource object; and
third DCI, indicating or scheduling at least two pieces of data, or indicating or scheduling data on at least two resource objects.

20. The method according to claim 19, wherein feedback information corresponding to the first DCI and/or the second DCI is located in a first specific sub-codebook, and the first specific sub-codebook corresponds to at least one of the following:
a semi-persistent scheduling SPS physical downlink shared channel PDSCH;
a transmission configuration indication TCI update;
specific downlink control information;
a resource object or data scheduled by specific downlink control information;
DCI that has corresponding feedback information but does not indicate or schedule data;
DCI that has corresponding feedback information but does not indicate or schedule any resource object;
DCI that has corresponding feedback information but does not indicate or schedule data on any resource object;
DCI that indicates or schedules one piece of data;
DCI that indicates or schedules one resource object; and
DCI that indicates or schedules data on one resource object.

21. The method according to claim 19, wherein downlink assignment index DAI or DCI counting information is determined according to a first counting object, and the first counting object comprises at least one of the following:
a counting object that indicates or schedules an SPS PDSCH;
a counting object corresponding to a TCI update;
a counting object corresponding to specific downlink control information;
a counting object corresponding to a resource object or data scheduled by specific downlink control information;
a counting object that has corresponding feedback information but does not indicate or schedule data on any resource object;
a counting object that has corresponding feedback information but does not indicate or schedule any resource object;
a counting object that indicates or schedules data on one resource object;
a counting object that indicates or schedules one resource object; and
a counting object that indicates or schedules one piece of data;
wherein the counting object comprises at least one of the following: PDCCH, DCI, time unit, pairing of DCI and time unit, pairing of PDCCH and time unit, and pairing of resource object and time unit.

22. The method according to claim 19, wherein DAI or DCI counting information is determined according to a second counting object, and the second counting object comprises at least one of the following:
a counting object that indicates or schedules at least two resource objects;
a counting object that indicates or schedules data on at least two resource objects; and
a counting object that indicates or schedules at least two pieces of data;
wherein the counting object comprises at least one of the following: PDCCH, DCI, time unit, pairing of DCI and time unit, pairing of PDCCH and time unit, and pairing of resource object and time unit.

23. The method according to claim 21 or 22, wherein the pairing of resource object and time unit is pairing of a first resource object and the time unit, and the first resource object comprises at least one of the following:
a specific resource object;
a resource object with the smallest or largest identifier;
a resource object with the smallest or largest index;
a resource object corresponding to a specific identifier;
a resource object with the smallest or largest sub-carrier spacing;
a resource object corresponding to a specific sub-carrier spacing;
a resource object with the largest number of blind detections or strongest blind detection capability;
a resource object with the largest limit on the number of pieces of DCI or maximum number of instances of scheduling;
a resource object with the smallest number of blind detections or weakest blind detection capability;
a resource object with the smallest limit on the number of pieces of DCI or minimum number of instances of scheduling;
a resource object corresponding to the dormancy indication information, enhanced Type-3 codebook related information, or hybrid automatic repeat request acknowledgement HARQ-ACK retransmission related information; and
a resource object corresponding to DCI that has related HARQ-ACK but has no corresponding data.

24. The method according to claim 19, wherein the target DCI corresponds to at least one of the following resource objects:
a specific resource object;
a reference resource object;
a scheduling resource object;
a scheduled resource object; and
a resource object in which the target DCI is located.

25. The method according to claim 24, wherein the target information is related to a resource object corresponding to the second DCI, and the resource object corresponding to the second DCI is at least one of the following:
a primary resource object;
an anchor resource object;
a resource object comprising a specific signal and/or channel;
a resource object with data being scheduled;
a resource object that satisfies a fourth preset condition among indicated and/or scheduled resource objects;
a resource object in which data that satisfies a fifth preset condition among indicated and/or scheduled data is located;
a resource object of which at least part of a corresponding information field is used for indicating the dormancy indication information; and
a resource object that satisfies a sixth preset condition among resource objects scheduling no data or having a frequency domain resource assignment field FDRA being invalid information or the FDRA being a specific value.

26. An apparatus for receiving downlink control information DCI, applied to a terminal, comprising:
a determination module, configured to determine target information; and
a processing module, configured to receive target DCI and/or determine feedback information corresponding to the target DCI based on the target information, wherein the target DCI carries dormancy indication information;
wherein the target information comprises at least one of the following:
a resource object corresponding to the target DCI;
downlink assignment index DAI or DCI counting information;
a limit on the number of DCI;
a limit on the number of scheduling; and
a terminal processing capability;
wherein the target DCI comprises at least one of the following:
first DCI, without indicating or scheduling data, or without indicating or scheduling data on any resource object;
second DCI, indicating or scheduling one piece of data, or indicating or scheduling data on one resource object; and
third DCI, indicating or scheduling at least two pieces of data, or indicating or scheduling data on at least two resource objects.

27. An apparatus for transmitting downlink control information DCI, applied to a network-side device, comprising:
a transmitting module, configured to transmit target DCI, wherein the target DCI carries dormancy indication information; and
a receiving module, configured to receive feedback information corresponding to the target DCI from a terminal;
wherein the target DCI comprises at least one of the following:
first DCI, without indicating or scheduling data, or without indicating or scheduling data on any resource object;
second DCI, indicating or scheduling one piece of data, or indicating or scheduling data on one resource object; and
third DCI, indicating or scheduling at least two pieces of data, or indicating or scheduling data on at least two resource objects.

28. A terminal, comprising a processor and a memory, wherein the memory stores a program or instruction runnable on the processor, and the program or instruction, when executed by the processor, implements the steps of the method for receiving downlink control information DCI according to any one of claims 1 to 18.

29. A network-side device, comprising a processor and a memory, wherein the memory stores a program or instruction runnable on the processor, and the program or instruction, when executed by the processor, implements the steps of the method for transmitting downlink control information DCI according to any one of claims 19 to 25.

30. A readable storage medium, wherein the readable storage medium stores a program or instruction, and the program or instruction, when executed by a processor, implements the steps of the method for receiving downlink control information DCI according to any one of claims 1 to 18, or implements the steps of the method for transmitting downlink control information DCI according to any one of claims 19 to 25.
